# EUROPEAN PATENT APPLICATION

(11) **EP 1 615 389 A1**
(43) Date of publication of application: **11.01.2006**
(21) Application number: 05254288.3
(22) Date of filing: 08.07.2005
(51) Int. Cl.: H04L 12/28, H04L 29/06

(54) **Bridging IEEE-1394 networks**

(30) Priority: 09.07.2004 JP 2004203826
(71) Applicant: SONY CORPORATION, Tokyo (JP)
(72) Inventor: Ooi, Takuya, Sony Corporation, Tokyo (JP)
(74) Representative: Leppard, Andrew John

(57) **Abstract**

An information processing device, connected to a global network and a local network, for relaying information between the global network and the local network, includes: physical layer controlling means for controlling processing in a physical layer of the local network; network initialization means which controls said physical layer controlling means so as to initialize and reconfigure a topology of the local network; dummy node setting means which controls said physical layer controlling means so as to set a dummy node for configuring a virtual network that is a virtual one of the local network; and virtual network configuration controlling means which controls said dummy node setting means so as to set the dummy node, controls said network initialization means so as to initialize the topology of the local network, and reconfigures the topology by using the dummy node set by said dummy node setting means and the node of the local network, hence to configure the topology of the virtual network.

## Description

The present invention relates to an information processing device and method, and its program. Recently, according to the improvement of the communication technique and the information processing technique, various networks represented by the Internet prevails and a lot of electronic equipments are connected through these networks. As the standard of these network communication, there are various standards including not only a wired network, for example, Ethernet (registered mark), USB (Universal Serial Bus), and the like but also a wireless network such as IEEE (Institute of Electrical and Electronic Engineers) 802.11x.

Network environment of the electronic equipments is spread in the private environment (what is called, at home) such as the individual user's house, and not only AV (Audio Visual) equipment including a TV receiver, a video recorder, an audio player, and a theater system, but also every electrical home appliance including a lighting apparatus, an air-conditioning apparatus, a microwave, a refrigerator, and a washing machine have each communication function and they are mutually connected to each other through each predetermined network. Further, an automatic control system provided as a facility including a crime-prevention system such as intercom, camera, and the like, an automatic bath watering system, a water temperature regulating system, and the like, is connected to the outside through the network.

In this recent domestic environment, various kinds of networks come to be constructed, and for example, as the standard of the network for connecting together the devices of processing the contents such as the AV equipment (for example, the information mainly containing the image data and the voice data), there is the IEEE 1394 having the copyright protection function in its upper layer protocol.

The IEEE 1394 is the standard of the network communication normalized by the IEEE in 1995, which corresponds to the Plug and Play (hot plug) enabling the removal of a device without necessity of power-off and further does not require any troublesome setting such as the setting of ID number and jumper. The maximum transfer speed is 400 Mbps (Bits Per Second), the maximum length of a cable for connecting between devices is about 4.5 m, and the maximum number of the connectable devices is 63. Various connecting methods are possible, and for example, the daisy chain connection of roping together the respective AV devices with a cable and the tree connection with a hub are possible. Further, various information transfer methods are prepared, and there is the isochronous method of assuring the real time ability, in addition to the asynchronous method.

Thus, the networks based on the IEEE 1394 (hereinafter, referred to as the IEEE 1394 network) can connect the digital equipment such as AV equipment easily. Many kinds (a large number) of the electrical home appliances conforming to the IEEE 1394 network are already on sale.

In the IEEE 1394 networks, however, the length of a cable connecting the devices is defined as about 4.5 m at the maximum. Namely, the IEEE 1394 network has a restriction in its configurable physical range (distance) and only the devices put within the restricted range are connected. Accordingly, when the two devices to connect are set at a distant of 4.5 m and more, for example, like the two devices (digital equipments such as AV equipments) set in different rooms, the IEEE 1394 network cannot connect these devices. In other words, in this case, the data using the IEEE 1394 network (for example, contents and the like) cannot be transferred between these devices.

Then, there is a method of connecting these devices by using the Ethernet@ network already in a wide use as the network of a personal computer, in which network the maximum length of the cable is longer (for example, 100m) than that of the IEEE 1394 (for example, refer to JP-A-10-200583). For example, a multi media hub having a bridge function between the IEEE 1394 network and the Ethernet network can connect the IEEE 1394 network and the Ethernet network.

Specifically, the Ethernet cable connects the two multi media hubs (it may do through a hub or a router) physically, and the devices (IEEE 1394 nodes) are connected to the two multi media hubs through the IEEE 1394 cable. Namely, the two IEEE 1394 networks are connected through the Ethernet network. According to the bridge function of these two multi media hubs, the information (topology) about the IEEE 1394 nodes within each of the IEEE 1394 networks the corresponding multi media hubs belong to is exchanged, hence to configure one virtual IEEE 1394 network including the two IEEE 1394 networks (with all the IEEE 1394 nodes connected to the two multi media hubs as its nodes). Thus, one (virtual) IEEE 1394 network can connect the two devices at a distance of more than the maximum length of the IEEE 1394 cable. In other words, data using the IEEE 1394 network can be transferred between these two devices.

In the above method, however, it is necessary to use an inherent control method which is not in the IEEE 1394 protocol, in order to control the transfer destination of the IEEE 1394 packet. For example, when installing a multi media hub (relay) using the IEEE 1394.1 bridge technique, the multi media hub requires a controller for a link layer and a controller for a physical layer according to the IEEE 1394.1 technique, there occurs the necessity of developing the above two newly, and the manufacturing cost of the multi media hub increases disadvantageously.

In this case, the device conforming to the IEEE 1394 (IEEE 1394 device) that becomes the IEEE 1394 node has to conform to the IEEE 1394.1 technique and the existing IEEE 1394 devices which have been already spread in a market or have been already arranged cannot be connected disadvantageously.

Embodiments of the invention seek to enable the configuration of a network beyond the restriction on the standard, for example, at ease and at low cost.

Aspects of the present invention are set out in the claims.

An information processing device according to an embodiment of the invention includes: physical layer controlling means for controlling the processing in a physical layer of the local network; network initialization means which controls the physical layer controlling means so as to initialize and reconfigure a topology of the local network; dummy node setting means which controls the physical layer controlling means so as to set a dummy node for configuring a virtual network that is a virtual local network; and virtual network configuration controlling means which controls the dummy node setting means so as to set the dummy node, controls the network initialization means so as to initialize the topology of the local network, and reconfigures the topology by using the dummy node set by the dummy node setting means and the node of the local network, hence to configure the topology of the virtual network.

In embodiments, the physical controlling means has a physical node of the local network, and the dummy node setting means can set the physical node belonging to the physical layer controlling means as the dummy node.

In embodiments, the physical layer controlling means can virtually set the node of the local network, and the dummy node setting means can set the virtual node set by the physical layer controlling means as the dummy node.

An information processing device according to an embodiment of the invention may further includes information obtaining means which obtains the information about some other information processing device from the other information processing device connected to the global network and some other local network for relaying the information between the global network and the other local network, and database holding means which configures and stores a database about the other information processing device, according to the information about the other information processing device obtained by the information obtaining means, in which the dummy node setting means determines the number of the dummy nodes and sets the dummy nodes for that number, according to the information of the database stored by the database holding means.

In embodiments, the information about the other information processing device includes the information about address of the other information processing device and the information about the number of the nodes within the other local network corresponding to the other information processing device.

In embodiments, the dummy node setting means can set the dummy nodes for the number of the nodes within the other local network, according to the information about the number of the nodes within the other local network obtained by the information obtaining means, and the virtual network configuration controlling means can control the network initialization means so as to initialize the topology of the local network and configure the topology of the virtual network having the same number of the nodes as the total of the number of the nodes within the local network and the number of the nodes within the other local network.

An information processing device according to an embodiment of the invention may further includes confirmation means for confirming the presence of the other information processing device connected to the global network, in which when the confirmation means cannot confirm the presence of the other information processing device, the virtual network configuration controlling means can control the information obtaining means so as to obtain the information about the other information processing device, control the database holding means so as to configure and store the database about the other information processing device according to the information about the other information processing device obtained by the information obtaining means, control the dummy node setting means so as to determine the number of the dummy nodes according to the information of the database stored by the database holding means and to set the dummy nodes for that number, and control the network initialization means so as to reconfigure the topology of the virtual network.

An information processing device according to an embodiment of the invention may further includes relaying means which converts a flame of a packet and relays the between the global network and the local network, and transmission controlling means which controls the relaying means so as to convert the flame of a packet and to transmit the flame to the global network when the destination of the packet generated in the local area is the dummy node.

An information processing method according to an embodiment of the invention includes: a physical layer controlling step of controlling the processing in a physical layer of the local network; a network initialization step of controlling the processing of the physical layer controlling step so as to initialize and reconfigure a topology of the local network; a dummy node setting step of controlling the processing of the physical layer controlling step so as to set a dummy node for configuring a virtual network that is a virtual local network; and a virtual network configuration controlling step of controlling the processing of the dummy node setting step so as to set the dummy node, of controlling the processing of the network initialization step so as to initialize the topology of the local network, and of reconfiguring the topology by using the dummy node set through the processing of the dummy node setting step and the node of the local network, hence to configure the topology of the virtual network.

A program according to an embodiment of the invention makes a computer to execute: a physical layer controlling step of controlling the processing in a physical layer of the local network; a network initialization step of controlling the processing of the physical layer controlling step so as to initialize and reconfigure a topology of the local network; a dummy node setting step of controlling the processing of the physical layer controlling step so as to set a dummy node for configuring a virtual network that is a virtual local network; and a virtual network configuration controlling step of controlling the processing of the dummy node setting step so as to set the dummy node, of controlling the processing of the network initialization step so as to initialize the topology of the local network, and of reconfiguring the topology by using the dummy node set through the processing of the dummy node setting step and the node of the local network, hence to configure the topology of the virtual network.

According to the information processing device and method and program according to the embodiments of the invention, the processing in the physical layer of the local network is controlled, the topology of the local network is initialized and reconfigured, the dummy nodes for configuring the virtual network that is a virtual local network are set, and the topology is reconfigured by using the dummy nodes and the nodes of the local network, thereby configuring the topology of the virtual network.

According to the invention, a network can be configured beyond restriction on the standard, for example, at ease and at low cost.

Embodiments of the present invention relate to an information processing device and method, storing medium, and program capable of configuring a network at ease and at low cost beyond restriction on the standard.

Further particular and preferred aspects of the present invention are set out in the accompanying independent and dependent claims. Features of the dependent claims may be combined with features of the independent claims as appropriate, and in combinations other than those explicitly set out in the claims.

The present invention will be described further, by way of example only, with reference to preferred embodiments thereof as illustrated in the accompanying drawings, in which:
Fig. 1 is a block diagram showing the constitutional example of the network system to which an embodiment of the invention is applied.
Fig. 2 is a view showing the external constitutional example of the bridge of Fig. 1.
Fig. 3 is a block diagram showing the internal constitutional example of the bridge of Fig. 1.
Fig. 4 is a schematic view showing the constitutional example of the bridge database.
Fig. 5 is a schematic view showing the constitutional example of the address conversion table.
Fig. 6 is a block diagram showing the constitutional example of the IEEE 1394 physical layer controller of Fig. 3.
Fig. 7 is a flow chart for use in describing an example of the bridge initialization processing.
Fig. 8 is a schematic view showing the constitutional example of the initialization request packet.
Fig. 9 is a flow chart for use in describing an example of the dummy node setting processing.
Fig. 10 is a flow chart for use in describing an example of the address conversion table configuration processing.
Fig. 11 is a flow chart for use in describing another example of the bridge initialization processing.
Fig. 12 is a flow chart for use in describing further another example of the bridge initialization processing.
Fig. 13 is a flow chart for use in describing an example of the bridge information packet supplying processing.
Fig. 14 is a flow chart for use in describing an example of the bridge information packet obtaining processing.
Fig. 15 is a view for use in describing an example of the state of the dummy node setting.
Fig. 16 is a view for use in describing the constitutional example of the IEEE 1394 virtual network.
Fig. 17 is a flow chart for use in describing an example of the bridge protocol frame transmission processing.
Fig. 18 is a flow chart, following Fig. 17, for use in describing an example of the bridge protocol frame transmission processing.
Fig. 19 is a schematic view showing the constitutional example of the bridge protocol frame.
Fig. 20 is a flow chart for use in describing an example of the bridge protocol frame receiving processing.
Fig. 21 is a flow chart for use in describing an example of the communication in the asynchronous method.
Fig. 22 is a flow chart for use in describing an example of the communication in the isochronous method.
Fig. 23 is a block diagram showing another constitutional example of the bridge of Fig. 1.
Fig. 24 is a flow chart for use in describing another example of the dummy node setting processing.
Fig. 25 is a flow chart for use in describing an example of the bus reset controlling processing.
Fig. 26 is a block diagram showing another constitutional example of the network system to which the invention is applied.
Fig. 27 is a block diagram showing further another constitutional example of the network system to which the invention is applied.
Fig. 28 is a flow chart for use in describing an example of the bridge confirmation processing.
Fig. 29 is a schematic view showing the constitutional example of the Ping frame.
Fig. 30 is a flow chart for use in describing an example of the bridge confirmation response processing.
Fig. 31 is a schematic view showing a constitutional example of the echo frame.
Fig. 32 is a block diagram showing a constitutional example of the personal computer to which the invention is applied.

Although embodiments of the invention will be described hereinafter, relationship between the components described in the claims and the specific examples in the embodiment of the invention will be shown as follows. This description is to confirm that the specific examples supporting the invention described in the claims are described in the embodiments of the invention. Accordingly, even when there is another specific example which is not described here as the corresponding example to some component, although it is described in the embodiment of the invention, it does not mean that specific example does not correspond to the component. On the contrary, even when a specific example is described here as the corresponding example to some component, it does not mean that the specific example does not correspond to the other components than the component.

Further, this description does not mean that the invention according to the specific examples described in the embodiment of the invention is described in all the claims. In short, this description is about the invention corresponding to the specific examples described in the embodiment of the invention, and it is not to deny the presence of the invention not described in the claims of this application, or the presence of the invention that will be applied in a divided way or added by amendment.

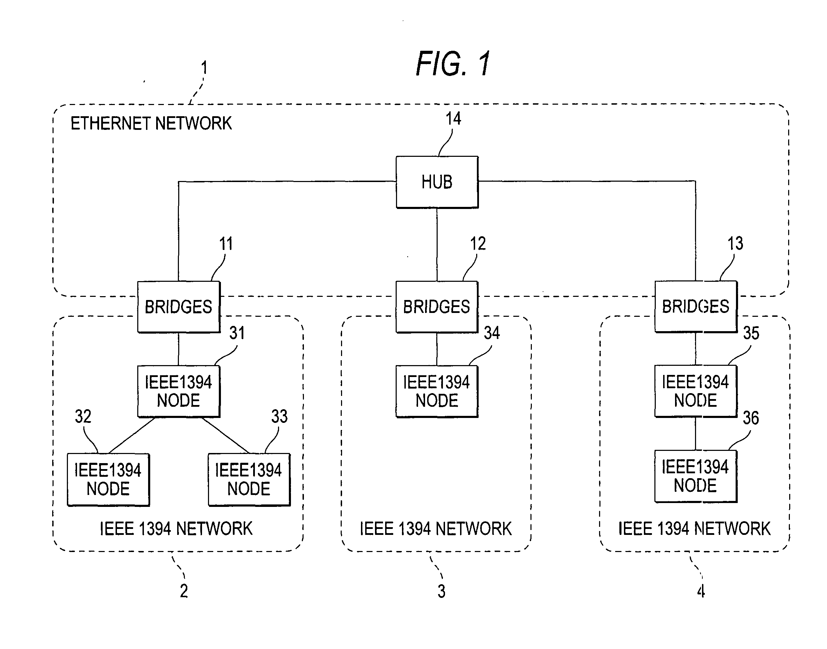

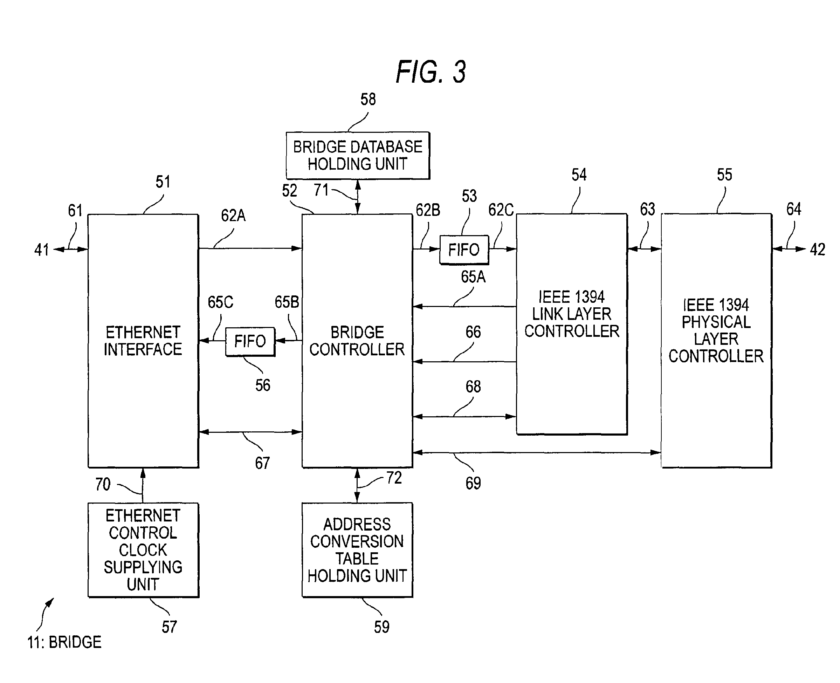

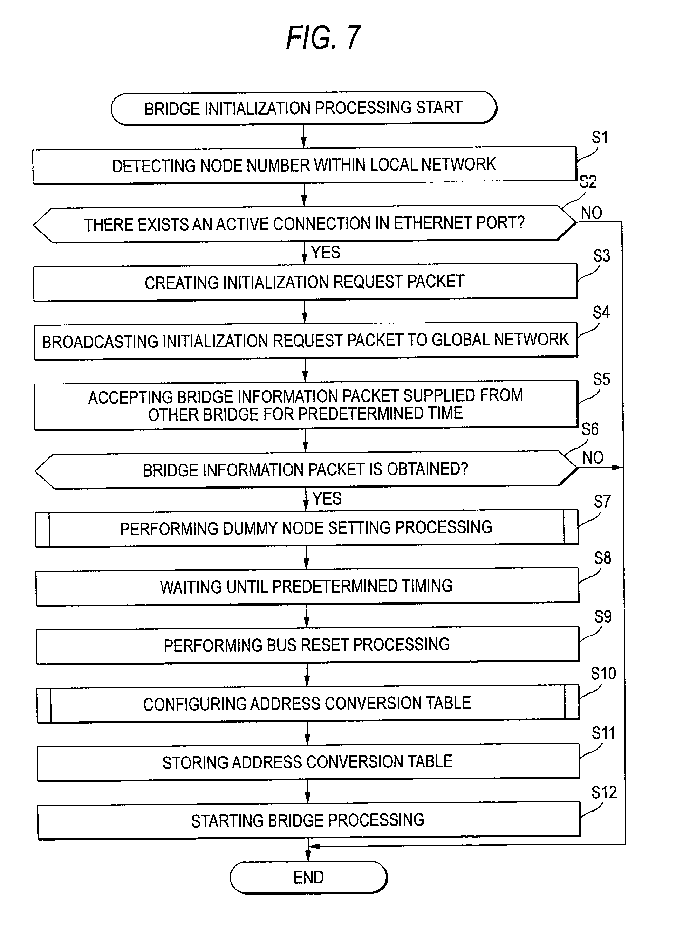

Embodiments of the invention provide an information processing device (for example, the bridge 11 in Fig. 1), connected to a global network (for example, the Ethernet network 1 in Fig. 1) and a local network (for example, the IEEE 1394 network 2 in Fig. 1), for relaying the information between the global network and the local network. The information processing device includes: a physical layer controlling unit (for example, the IEEE 1394 physical layer controller 55 in Fig. 3) for controlling processing in a physical layer of the local network; a network initialization unit (for example, the bridge controller 52 in Fig. 3 performing the processing of Step S9 in Fig. 7) which controls the physical layer controlling unit so as to initialize and reconfigure a topology of the local network; a dummy node setting unit (for example, the bridge controller 52 in Fig. 3 performing the processing of Step S7 in Fig. 7) which controls the physical layer controlling unit so as to set a dummy node for configuring a virtual network that is a virtual local network; and a virtual network configuration controlling unit (for example, the bridge controller 52 in Fig. 3 performing the bridge initialization processing in Fig. 7) which controls the dummy node setting unit so as to set the dummy node (for example, Step S7 in Fig. 7), controls the network initialization unit so as to initialize the topology of the local network (for example, Step S9 in Fig. 7), and reconfigures the topology by using the dummy node set by the dummy node setting unit and the node of the local network, hence to configure the topology of the virtual network.

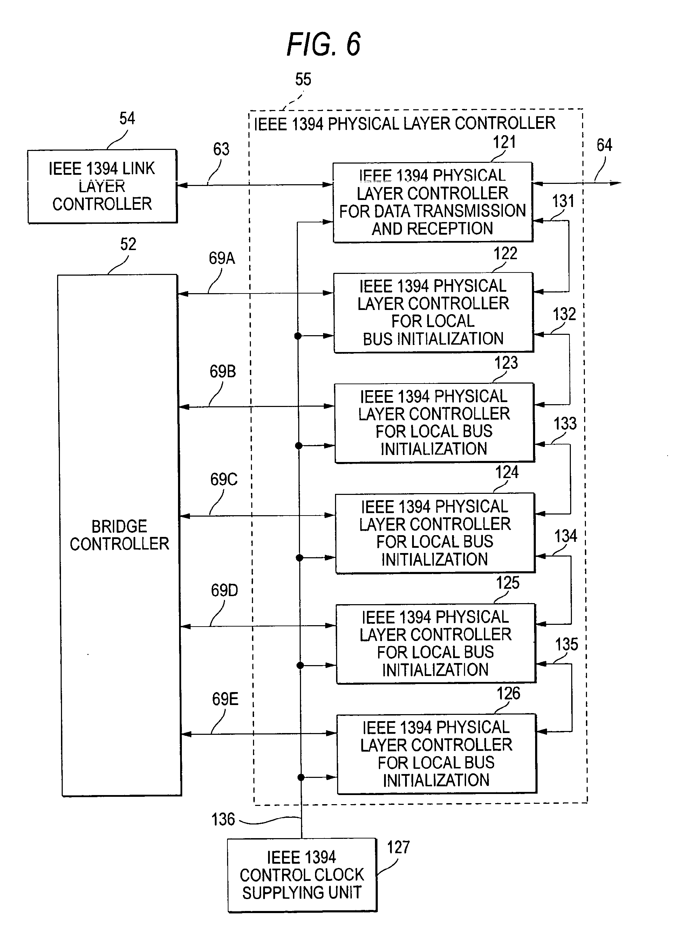

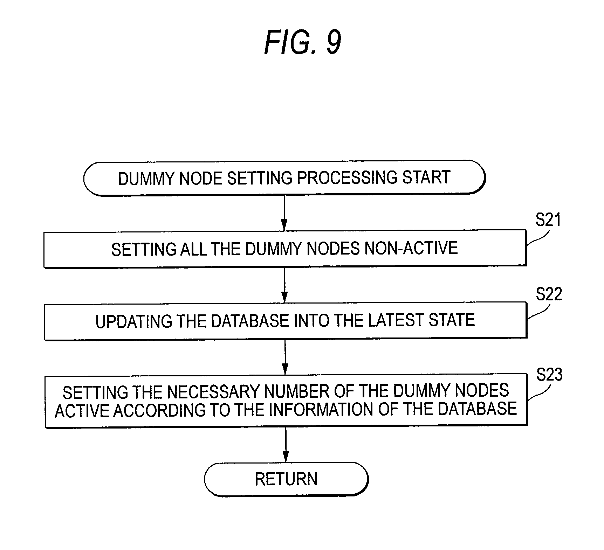

The physical controlling unit has a physical node of the local network (for example, the IEEE 1394 physical layer controller 122 for local bus initialization to the IEEE 1394 physical layer controller 126 for local bus initialization in Fig. 6) and the dummy node setting unit can set the physical node belonging to the physical layer controlling unit as the dummy node (for example, Step S23 in Fig. 9).

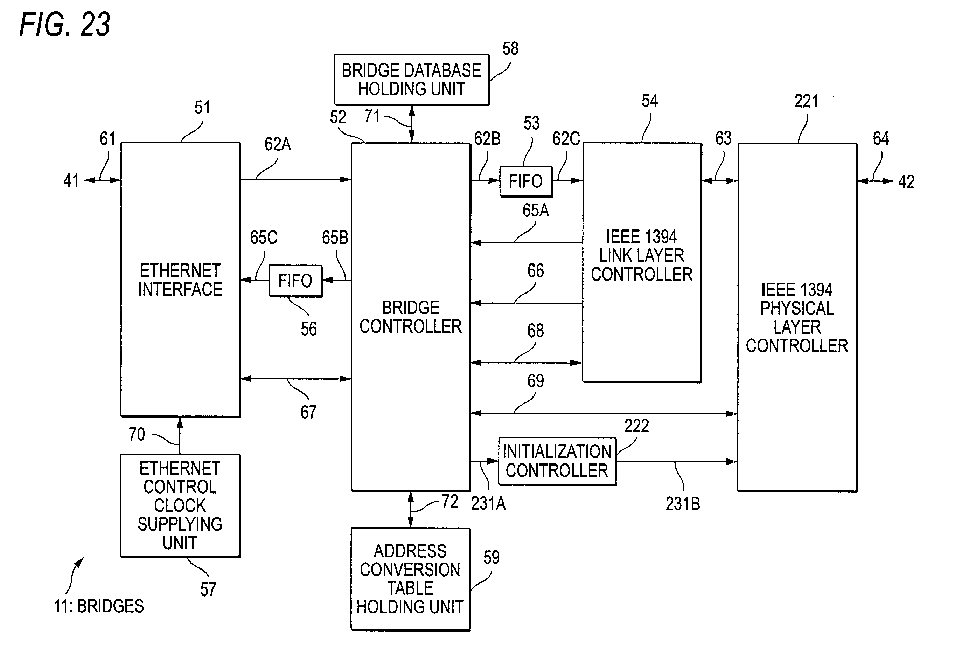

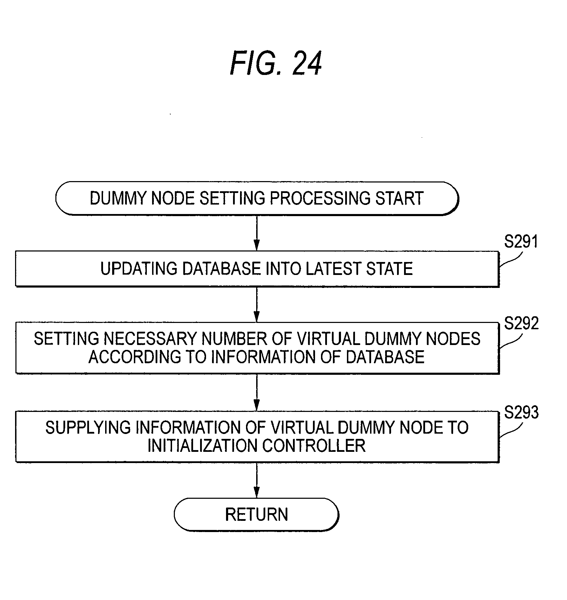

The physical layer controlling unit (for example, the IEEE 1394 physical layer controller 221 in Fig. 23) virtually can set the node of the local network, and the dummy node setting unit can set the virtual node set by the physical layer controlling unit as the dummy node (for example, Steps S292 in Fig. 24).

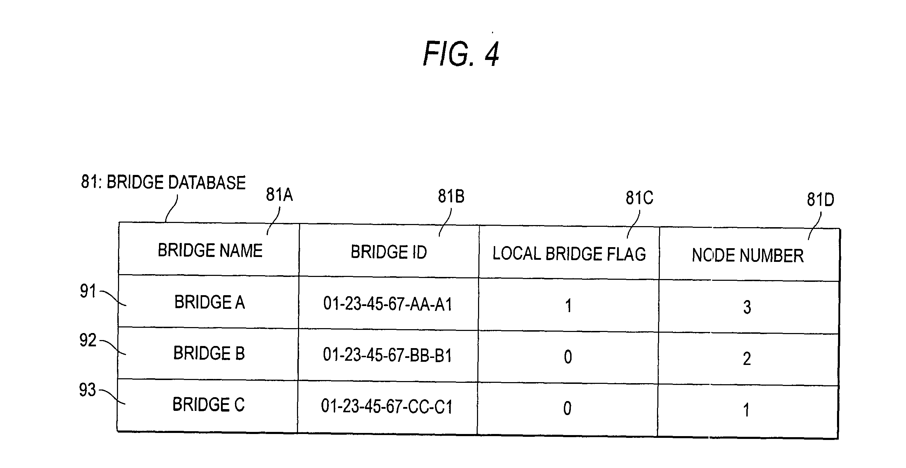

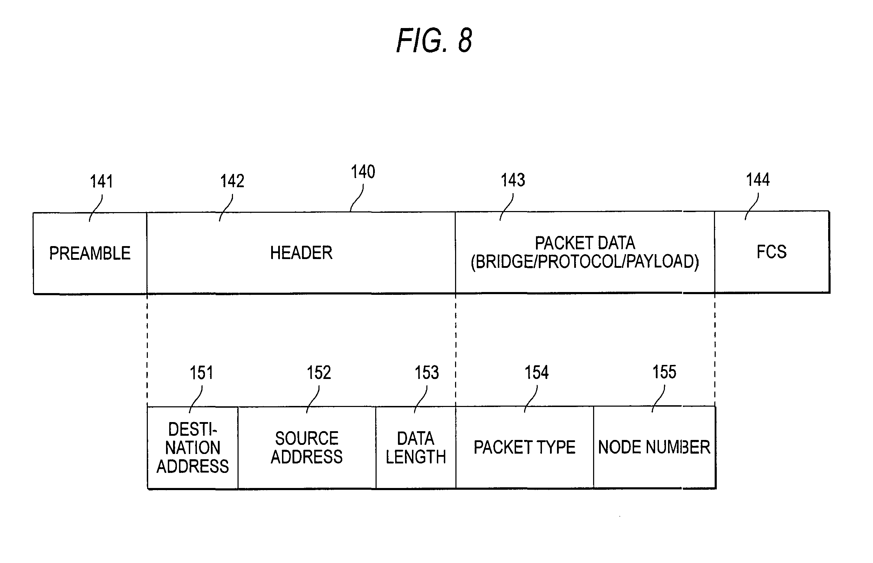

The information processing device may further include an information obtaining unit (for example, the bridge controller 52 in Fig. 3 performing the processing of Step S5 in Fig. 7) for obtaining the information about another information processing device (for example, the initialization request packet 140 or the bridge information packet same as the initialization request packet 140 in Fig. 8), from the other information processing device (for example, the bridge 12 or the bridge 13 in Fig. 1) connected to the global network and another local network (for example, the IEEE 1394 network 3 or the IEEE 1394 network 4 in Fig. 1), for relaying the information between the global network and the other local network, and a database holding unit (for example, the bridge database holding unit 58 in Fig. 3) which configures and stores a database (for example, the bridge database 81 in Fig. 4) about the other information processing device, according to the information about the other information processing device obtained by the information obtaining unit, in which the dummy node setting unit can determine the number of the dummy nodes and set the dummy nodes for that number, according to the information of the database stored by the database holding unit.

The information about the other information processing device may include the information about address of the other information processing device (for example, the source address 152 in Fig. 8) and the information about the number of nodes (the node number 155 in Fig. 8) within the other local network corresponding to the other information processing device.

The dummy node setting unit can set the dummy nodes for the number of the nodes within the other local network (for example, Step S23 in Fig. 9), according to the information about the number of the nodes within the other local network obtained by the information obtaining unit, and the virtual network configuration controlling unit can control the network initialization unit so as to initialize the topology of the local network and to configure the topology of the virtual network having the same number of the nodes as the total of the number of the nodes within the local network and the number of the nodes within the other local network (for example, Steps S10 in Fig. 7).

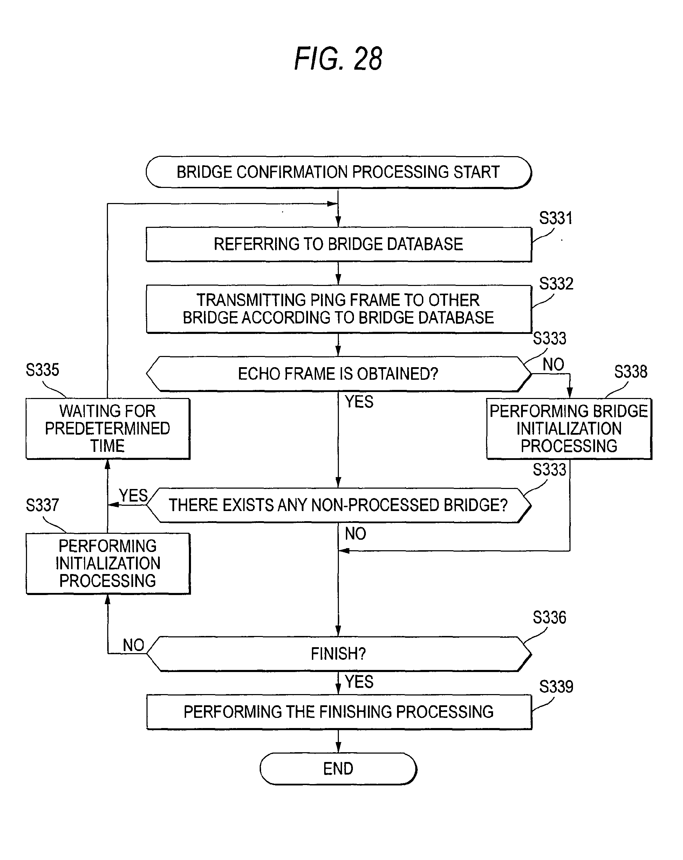

The information processing device may further includes a confirmation unit (for example, the bridge controller 52 in Fig. 3 performing the bridge confirmation processing in Fig. 28) for confirming the presence of the other information processing device connected to the global network, in which when the confirmation unit cannot confirm the presence of the other information processing device, the virtual network configuration controlling unit may control the information obtaining unit so as to obtain the information about the other information processing device, control the database holding unit so as to configure and store the database about the other information processing device according to the information about the other information processing device obtained by the information obtaining unit, control the dummy node setting unit so as to determine the number of the dummy nodes according to the information of the database stored by the database holding unit and to set the dummy nodes for that number, and control the network initialization unit so as to reconfigure the topology of the virtual network (for example, Step S340 in Fig. 28).

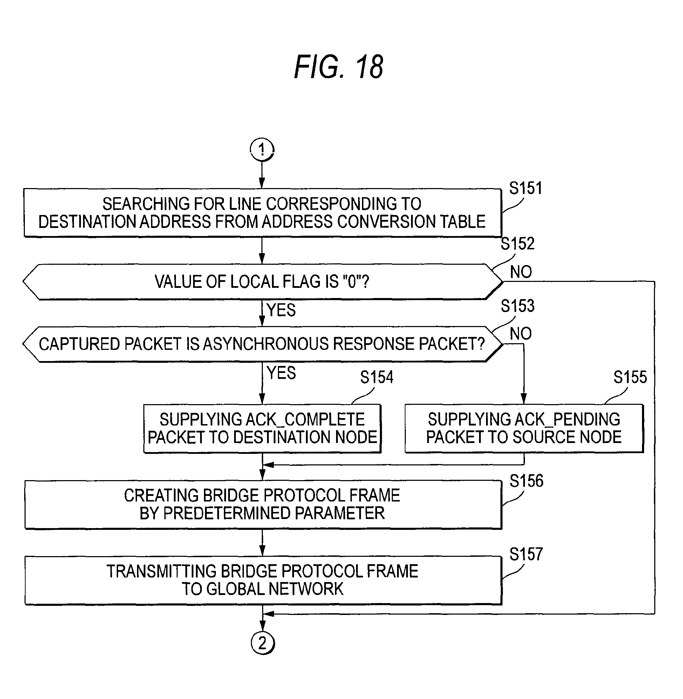

The information processing unit may further includes a relaying unit (for example, the bridge controller 52 in Fig. 3) which converts a flame of a packet and relays between the global network and the local network, and a transmission controlling unit (for example, the bridge controller 52 in Fig. 3 performing the processing of Step S155 to Step S157 in Fig. 18) which controls the relaying unit so as to convert the flame of a packet and to transmit the flame to the global network when the destination of the packet generated in the local area is the dummy node.

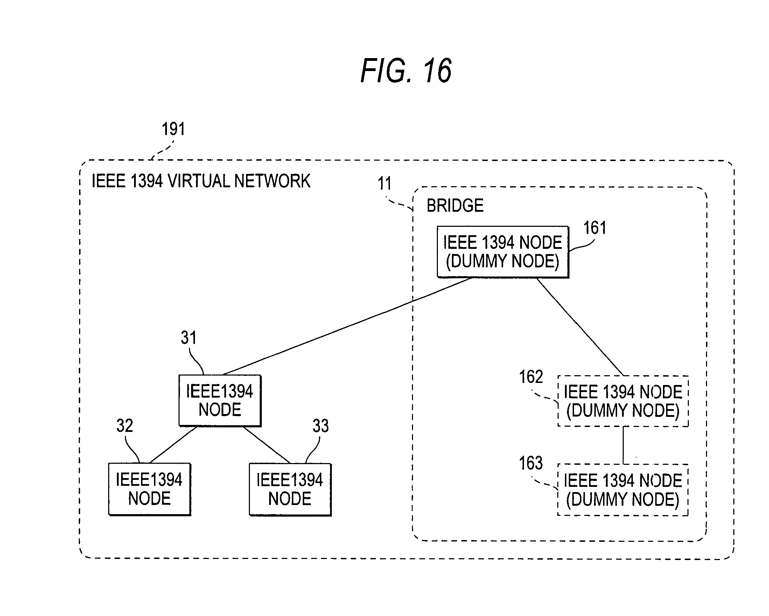

Embodiments of the invention provide the information processing method of the information processing device (for example, the bridge 11 in Fig. 1), connected to the global network (for example, the Ethernet network 1 in Fig. 1) and the local network (for example, the IEEE 1394 network 2 in Fig. 1), for relaying the information between the global network and the local network. This information processing method includes: a physical layer controlling step (for example, Step S 23 in Fig. 9) of controlling processing in a physical layer of the local network; a network initialization step (for example, Step S9 in Fig. 7) of controlling the processing of the physical layer controlling step so as to initialize and reconfigure the topology of the local network; a dummy node setting step (for example, Step S7 in Fig. 7) of controlling the processing of the physical layer controlling step so as to set a dummy node for configuring a virtual network that is a virtual local network (for example, the IEEE 1394 virtual network 191 in Fig. 16); and a virtual network configuration controlling step (for example, the bridge initialization processing in Fig. 7) of controlling the processing of the dummy node setting step so as to set the dummy node, of controlling the network initialization step so as to initialize the topology of the local network, and of reconfiguring the topology by using the dummy node set through the processing of the dummy node setting step and the node of the local network, hence to configure the topology of the virtual network.

Embodiments of the invention provide a program for making a computer (for example, the bridge 11 in Fig. 1), connected to the global network (for example, the Ethernet network 1 in Fig. 1) and the local network (for example, the IEEE 1394 network 2 in Fig. 1), for relaying the information between the global network and the local network. The program includes: a physical layer controlling step (for example, Step S23 in Fig. 9) of controlling processing in a physical layer of the local network; a network initialization step (for example, Step S9 in Fig. 7) of controlling the processing of the physical layer controlling step so as to initialize and reconfigure a topology of the local network; a dummy node setting step (for example, Step S7 in Fig. 7) of controlling the processing of the physical layer controlling step so as to set a dummy node for configuring a virtual network (for example, the IEEE 1394 virtual network 191 in Fig. 16) that is a virtual local network; and a virtual network configuration controlling step (for example, the bridge initialization processing in Fig. 7) of controlling the processing of the dummy node setting step so as to set the dummy node, of controlling the processing of the network initialization step so as to initialize the topology of the local network, and of reconfiguring the topology by using the dummy node set through the processing of the dummy node setting step and the node of the local network, hence to configure the topology of the virtual network.

Hereinafter, a mode of the embodiments of the present invention will be described with reference to the drawings.

Fig. 1 shows a constitutional example of the mode of one embodiment of a network system to which the present invention is applied.

In the example of Fig. 1, this network system includes one Ethernet network (registered mark) 1 and three IEEE (Institute of Electrical and Electronic Engineers) 1394 networks 2 to 4. The IEEE 1394 network 2 to the IEEE 1394 network 4 are connected to the Ethernet network 1 respectively through a bridge 11 to a bridge 13. Namely, in the network system of Fig. 1, the Ethernet network 1 is formed as a global network for connecting a plurality of local networks and the IEEE 1394 network 2 to the IEEE 1394 network 4 are respectively formed as the local networks connected to each other by the Ethernet network 1.

The Ethernet network 1 is a network based on the standard of IEEE 802.3, including the bridge 11 to the bridge 13 and a hub (HUB) 14 conforming to this standard. As illustrated in Fig. 1, the bridge 11 to the bridge 13 are connected to each other through the hub 14.

The bridge 11 to the bridge 13 are provided with each bridge function between the Ethernet network and each IEEE 1394 network, so as to perform the relay processing (bridge processing) such as converting a packet supplied from one network into a packet corresponding to the other network and transmitting the packet to the other network. The detailed constitutional example of each of the bridge 11 to the bridge 13 will be described later.

The hub 14, having a lot of ports, is a concentrator for connecting each node in a star by connecting the devices (nodes) to the respective ports. The respective devices connected to the respective ports of this hub 14 store the transfer data into the Ethernet frame that is a packet of 60 bytes to 1514 bytes, thereby transmitting and receiving the data to and from each other through the hub 14 to transfer the objective data. When the hub 14 is provided with the packet (Ethernet frame) from a node connected to one of its ports, it specifies the destination node, according to the information concerned with the destination (for example, MAC address (Media Access Control address) and the like) included in the header and the like, referring to the packet, and supplies the packet to the destination node through a port to which the specified destination node is connected. The hub 14 may transmit (broadcast) the supplied packet to all the ports, regardless of the information about the destination. Alternatively, the hub 14 may have a router function. Further, the hub 14 may be at any of the hierarchy to control the transmission of the packet.

The IEEE 1394 network 2 is formed by the bridge 11 conforming to the standard of the IEEE 1394 and three IEEE 1394 node 31 to IEEE 1394 node 33, which are mutually connected to each other through IEEE 1394 bus (cable) that is a bus conforming to the standard of the IEEE 1394. As illustrated in Fig. 1, in the IEEE 1394 network 2, the IEEE 1394 bus (cable) connects the IEEE 1394 node 31 to the bridge 11 and the IEEE 1394 node 32 and the IEEE 1394 node 33 to the IEEE 1394 node 31. In short, the IEEE 1394 network 2 is a local network belonging to the bridge 11. The IEEE 1394 node 31 to the IEEE 1394 node 33 are respectively formed by a digital device of AV equipment, for example, TV receiver, video recorder, audio player, theater system, and the like. The IEEE 1394 node 31 to the IEEE 1394 33 may be any of the domestic electric appliance such as lighting apparatus, air-conditioner, microwave oven, refrigerator, washing machine, and the like, or they may be an interface of automatic control system provided as a facility including a crime-prevention system such as intercom, camera, and the like, an automatic bath watering system, a water temperature regulating system, and the like.

The IEEE 1394 network 3 is formed by the bridge 12 and the IEEE 1394 node 34 conforming to the standard of the IEEE 1394, which are mutually connected to each other through the IEEE 1394 bus (cable) that is a bus conforming to the standard of the IEEE 1394. As illustrated in Fig. 1, in the IEEE 1394 network 3, the IEEE 1394 bus (cable) connects the IEEE 1394 node 34 to the bridge 12. In short, the IEEE 1394 network 3 is a local network belonging to the bridge 12. The IEEE 1394 node 34 is formed by a digital device of AV equipment, for example, TV receiver, video recorder, audio player, theater system, and the like. The IEEE 1394 node 34 may be any of the domestic electric appliance such as lighting apparatus, air-conditioner, microwave oven, refrigerator, washing machine, and the like, or they may be an interface of automatic control system and the like provided as a facility including a crime-prevention system such as intercom, camera, and the like, an automatic bath watering system, a water temperature regulating system, and the like.

The IEEE 1394 network 4 is formed by the bridge 13 and the IEEE 1394 nodes 35 and 36 conforming to the standard of the IEEE 1394, which are connected to each other through IEEE 1394 bus (cable) that is a bus conforming to the standard of the IEEE 1394. As illustrated in Fig. 1, in the IEEE 1394 network 4, the IEEE 1394 bus (cable) connects the IEEE 1394 node 35 to the bridge 13 and the IEEE 1394 node 35 to the IEEE 1394 node 36. In short, the IEEE 1394 network 4 is a local network belonging to the bridge 13. The IEEE 1394 node 35 to the IEEE 1394 node 36 are respectively formed by a digital device of AV equipment, for example, TV receiver, video recorder, audio player, theater system, and the like. Each of the IEEE 1394 node 35 and the IEEE 1394 node 36 may be one of the domestic electric appliance such as lighting apparatus, air-conditioner, microwave oven, refrigerator, washing machine, and the like, or they may be an interface of automatic control system and the like provided as a facility including a crime-prevention system such as intercom, camera, and the like, an automatic bath watering system, a water temperature regulating system, and the like.

In Fig. 1, the bridge 11 to the bridge 13 configure one virtual IEEE 1394 network (hereinafter, referred to as the IEEE 1394 virtual network) including the IEEE 1394 network 2 to the IEEE 1394 network 4, through mutual communication. Thus, the IEEE 1394 node 31 to the IEEE 1394 node 36 are connected together by this IEEE 1394 virtual network (as the nodes of the IEEE 1394 virtual network), thereby enabling the mutual communication.

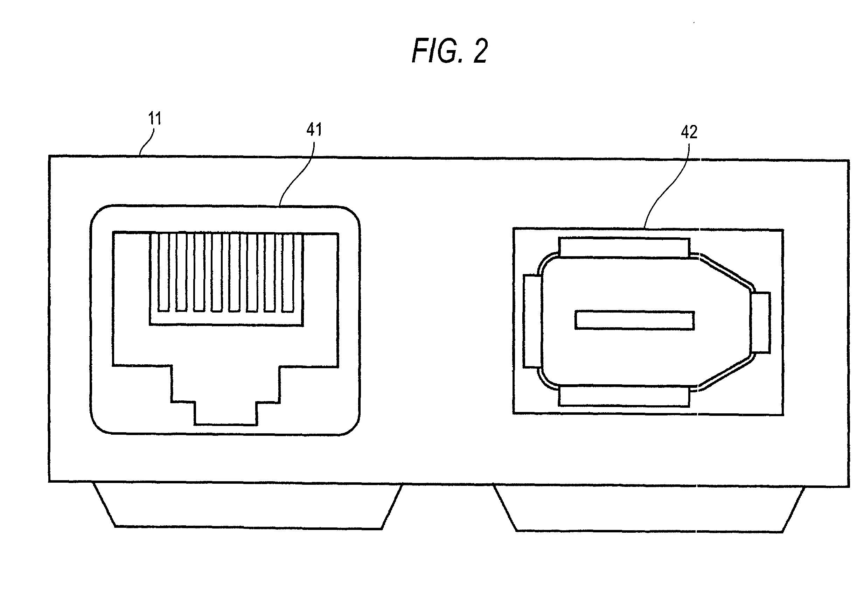

Fig. 2 is a view showing the external constitutional example of the bridge 11 in Fig. 1. Since the bridge 11 operates as a relay between the Ethernet network 1 and the IEEE 1394 network 2, the body of the bridge 11 is provided with an Ethernet port 41 for connecting the Ethernet cable and an IEEE 1394 port 42 for connecting the IEEE 1394 cable. A plurality of the respected ports may be provided. As illustrated in Fig. 2, it is not necessary to provide the Ethernet port 41 and the IEEE 1394 port 42 on the same surface of the body of the bridge 11 but they may be separately provided on any position of the body as far as it is the connectable place of each cable. For example, they may be provided on the different surfaces.

The external constitutional example of each of the bridge 12 and the bridge 13 is the same as that of the bridge 11, and since the constitutional example of Fig. 2 can be applied there, their description will be omitted.

Fig. 3 is a block diagram showing the internal constitutional example of the bridge 11 in Fig. 1.

In Fig. 3, the bridge 11 includes an Ethernet interface 51, a bridge controller 52, a FIFO (First-In First-Out) 53, an IEEE 1394 link layer controller (hereinafter, referred to as the IEEE 1394 Link) 54, an IEEE 1394 physical layer controller (hereinafter, referred to as the IEEE 1394 PHY) 55, a FIFO 56, an Ethernet control clock supplying unit 57, a bridge database holding unit 58, and an address conversion table holding unit 59.

The Ethernet interface 51 is connected to the Ethernet port 41 through the bus 61 and performs the interface processing for the Ethernet network 1. For example, in the case of Fig. 1, the Ethernet interface 51 obtains a packet supplied from the hub 14 connected through the Ethernet port 41 and supplies a packet which is supplied from the FIFO 56 that is the FIFO buffer memory for Ethernet packet transmission through the bus 65C, to the hub 14 through the Ethernet port 41.

As described later, a control clock is supplied to the Ethernet interface 51 from the Ethernet control clock supplying unit 57 through the bus 70. The Ethernet interface 51 performs the interface processing in synchronization with this control clock. When the Ethernet interface processing unit 51 obtains the packet (packet destined for the bridge 11) from the outside through the bus 61, it supplies the packet to the bridge controller 52 through the bus 62A.

The bridge controller 52 performs the relay processing (bridge processing) between the Ethernet network 1 and the IEEE 1394 network 2. Namely, the bridge controller 52 converts the Ethernet packet (packet of the structure based on the standard of the IEEE 802.3) supplied through the Ethernet network 1 into the IEEE 1394 packet (packet of the structure based on the standard of the IEEE 1394) and supplies it to the IEEE 1394 network 2, and coverts the IEEE 1394 packet supplied from the IEEE 1394 network 2 into the Ethernet packet and supplies it to the Ethernet network 1. Specifically, obtaining the Ethernet packet supplied from the Ethernet interface 51 through the bus 62A, the bridge controller 52 converts the Ethernet packet into the IEEE 1394 packet and supplies the obtained IEEE 1394 packet to the FIFO 53 that is the FIFO buffer memory for receiving the IEEE 1394 packet. Obtaining the IEEE 1394 packet supplied from the IEEE 1394 Link 54 through the bus 65A, the bridge controller 52 converts the IEEE 1394 packet into the Ethernet packet and supplies the obtained Ethernet packet to the FIFO 56.

The bridge controller 52 is connected to the IEEE 1394 Link 54 through the bus 66 for notification of isochronous cycle timer. When transmitting a packet in an isochronous method, the bridge controller 52 performs the transmission processing according to the isochronous cycle (cycle for transmitting packets) notified by the IEEE 1394 Link 54 through this bus 66.

The bridge controller 52 is connected to the Ethernet interface 51 through the bus 67 for Ethernet physical layer control and instructs the Ethernet interface 51 to do the control processing and the like in the physical layer of the Ethernet.

The bridge controller 52 is connected to the IEEE 1394 Link 54 through the bus 68 for the IEEE 1394 link layer control and instructs the IEEE 1394 Link 54 to do the control processing and the like in the link layer of the IEEE 1394.

Further, the bridge controller 52 is connected to the IEEE 1394 PHY 55 through the bus 69. This bus 69 is a bus for transferring the control information for controlling the processing of the physical layer of the IEEE 1394 and the bridge controller 52 controls the IEEE 1394 PHY 55 through this bus 69.

Besides, the bridge controller 52 is connected to the bridge database holding unit 58 through the bus 71 and as described later, it supplies the information about the other bridge and the information about itself to the bridge database holding unit 58, where the same information is kept as the database (bridge database). The bridge controller 52 gains access to the bridge database holding unit 58 through the bus 71 and obtains the necessary information from the bridge database held by the bridge database holding unit 58 depending on necessity.

Further, the bridge controller 52 is connected to the address conversion table holding unit 59 through the bus 72. The bridge controller 52 supplies the information about the IEEE 1394 node 31 to the IEEE 1394 node 36 of the networks that would be the nodes of the IEEE 1394 virtual network to the address conversion table holding unit 59 through the bus 72, where the same information is kept as the address conversion table that is a table for converting each address in the actual (real) network configuration into each address in the IEEE 1394 virtual network. The bridge controller 52 gains access to the address conversion table holding unit 59 through the bus 72 and performs the conversion processing of some address depending on necessity by using the address conversion table held by the address conversion table holding unit 59.

The FIFO 53 is a buffer memory of the FIFO method formed by a semiconductor memory such as SRAM (Static Random Access Memory), DRAM (Dynamic Random Access Memory), and the like, which supplies the IEEE 1394 packet to the IEEE 1394 Link 54 through the bus 62C at a predetermined timing after temporarily storing the IEEE 1394 packet obtained by the bridge controller 52 through the bus 62B.

The IEEE 1394 Link 54 controls the link layer (the layer positioned at the upper level than the physical layer, where each format and error check method of various packets transferred in the IEEE 1394 network are defined) of the IEEE 1394 network 2 that is the local network corresponding to the bridge 11. Namely, the IEEE 1394 Link 54 checks the supplied packet, determines the destination of the packet according to the header information of the packet, and supplies the packet there. Specifically, the IEEE 1394 Link 54 checks the error of the packet supplied from the node of the IEEE 1394 network 2 and supplies it to the IEEE 1394 PHY 55 through the bus 63 in order to supply it to the destination. The IEEE 1394 Link 54 supplies the IEEE 1394 packet supplied from the FIFO 53 through the bus 62C to the IEEE 1394 PHY 55 through the bus 63 in order to supply the packet to the destination node of the IEEE 1394 network 2.

The IEEE 1394 Link 54 controls the transfer cycle of the isochronous method besides as the control processing of the link layer and notifies the bridge controller 52 of the isochronous cycle (cycle for transmitting packets) through the bus 66.

The IEEE 1394 PHY 55 is formed by a plurality of IEEE 1384 physical layer controllers including dummy nodes described later and it is connected to the IEEE 1394 Link 54 through the bus 63 as well as connected to the IEEE 1394 port 42 through the bus 64. The IEEE 1394 PHY 55 controls the coding method of a serial signal, the electric specification of a signal, the procedure of automatically setting the system configuration, the adjustment procedure about the use right of a bus, the procedure of transmitting the state of a traffic to the whole buses, and the like, according to the specification. In short, the IEEE 1394 PHY 55 controls the processing in the physical layer of the IEEE 1394. For example, it controls the communication processing of each node in the IEEE 1394 network 2 and performs the relay processing of the information between each node and the IEEE 1394 Link 54. The IEEE 1394 PHY 55 performs the processing of configuring the IEEE 1394 virtual network according to the control from the bridge controller 52 in the initialization processing of the IEEE 1394 network 2, that is, the local network. The details will be described later.

The FIFO 56 is a buffer memory of the FIFO method formed by a semiconductor memory such as SRAM, DRAM, and the like similarly to the FIFO 53, which temporarily stores the Ethernet packet supplied from the bridge controller 52 through the bus 65B and supplies it to the Ethernet interface 51 through the bus 65C at a predetermined timing. The Ethernet interface 51 supplies the Ethernet packet received from the FIFO 56, to the Ethernet port 41 through the bus 61, thereby supplying it to the Ethernet network 1.

The Ethernet control clock supplying unit 57 generates a clock of predetermined frequency for controlling the Ethernet interface 51 and supplies it to the Ethernet interface 51 through the bus 70. The Ethernet interface 51 performs the interface processing in synchronization with the control clock thus supplied.

The bridge database holding unit 58 is formed by a storing medium such as a semiconductor memory (for example, RAM (Random Access Memory), flash memory, and the like) and a magnetic disk (for example, hard disk and the like), which builds up a bridge database with the information about the respective bridges (the IEEE 1394 networks corresponding to the respective bridges) taken into a database. The bridge database holding unit 58 updates the held bridge database or supplies the information of the held bridge database to the bridge controller 52 according to the information or request supplied from the bridge controller 52 through the bus 71. The details of the bridge database will be described later.

The address conversion table holding unit 59 is formed by a storing medium such as RAM, flash memory, hard disk, and the like, which builds up and holds an address conversion table with the information about the addresses of the IEEE 1394 nodes (in the case of Fig. 1, the IEEE 1394 node 31 to the IEEE 1394 node 36) forming the IEEE 1394 virtual network listed in a table as the address conversion list. The address conversion table holding unit 59 updates the held address conversion table or supplies the information of the held address conversion table to the bridge controller 52, according to the information or request supplied from the bridge controller 52 through the bus 72. The details of the address conversion table will be described later.

Next, the bridge database held by the bridge database holding unit 58 of Fig. 3 will be described. Fig. 4 is a schematic view of the constitutional example of the bridge database.

As illustrated in Fig. 4, the bridge database 81 includes the items of bridge name 81A, bridge ID 81B, local bridge flag 81C, and node number 81D.

The bridge name 81A is the item for registering the name of a bridge to be registered as one record of information. The information to be registered in this bridge name 81A has only to be at least recognizable by the record, or instead of the name identifying each bridge, it may be simply the serial number of records and the like. A user can not only recognize the record but also easily understand the correspondence between each record and bridge by registering into this item (bridge name 81A), for example, the product name of each bridge and the name and the like the user individually sets to each bridge.

The bridge ID 81B is the item for registering the information for uniquely recognizing each bridge. For example, a unique ID such as MAC address (Media Access Control address) and the like is registered. Needless to say, it may be the ID information other than the MAC address.

The local bridge flag 81C is a flag indicating whether the bridge corresponding to the record is this bridge (which record is the record corresponding to this bridge). The record where the value of the local bridge flag 81C means "1" is the record corresponding to this bridge (the record where the value of the local bridge flag 81C is "0" means the record corresponding to the other bridge).

The node number 81D is the item for registering the number of the IEEE 1394 nodes in each IEEE 1394 network corresponding to each bridge. For example, in the case of the system of Fig. 1, since the node number of the IEEE 1394 network 2 is three (the IEEE 1394 node 31 to the IEEE 1394 node 33), the value of the node number 81D of the record corresponding to the bridge 11 is "3"; since the node number of the IEEE 1394 network 3 is one (the IEEE 1394 node 34), the value of the node number 81D of the record corresponding to the bridge 12 is "1"; since the node number of the IEEE 1394 network 4 is two (the IEEE 1394 node 35 and the IEEE 1394 node 36), the value of the node number 81D of the record corresponding to the bridge 13 is "2".

Fig. 4 shows the constitutional example of the bridge database 81 including the items, and three records, the record 91 to the record 93, are registered in this bridge database 81, in correspondence to the system example of Fig. 1. For example, "bridge A" is registered in the bridge name 81A of the record 91, which shows the name of the bridge corresponding to this record 91 is the "bridge A". Further, "01-23-45-67-AA-A1" is registered in the bridge ID 81B of the record 91, which shows the MAC address of the "bridge A" is "01-23-45-67-AA-A1". The value "1" is registered in the local bridge flag 81C of the record 91, which shows this bridge database 81 is the bridge database held by the bridge database holding unit 58 of the bridge A, and the value "3" is registered in the node number 81D, which shows the node number of the IEEE 1394 network 2 belonging to the "bridge A" is "3".

The bridge database 81 may include another item than the mentioned ones or it may exclude some of the above-mentioned items. The number of the items may be arbitrary and the number of records to be registered may be arbitrary. A plurality of records may be registered as for one bridge or one record may be registered as for a plurality of bridges.

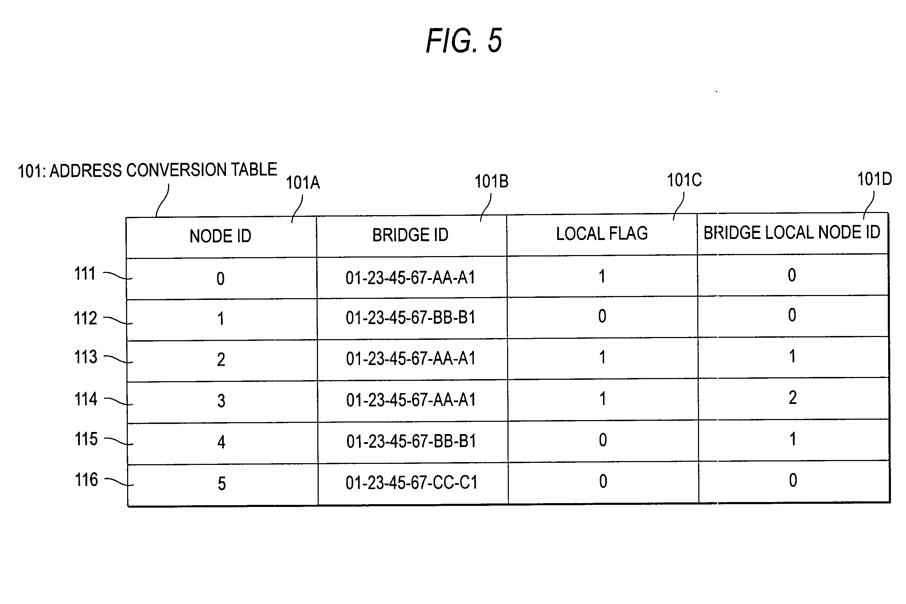

The address conversion table held by the address conversion table holding unit 59 of Fig. 3 will be described this time. Fig. 5 is a schematic view showing the constitutional example of the address conversion table.

The address conversion table 101 held by the address conversion table holding unit 59 is the table information with the information for every IEEE 1394 node registered as "row", including each item of node ID 101A, bridge ID 101B, local flag 101C, and bridge local node ID 101D.

The node ID 101A is the ID for identifying each row to be registered in the address conversion table 101, in other words, identifying each node of the IEEE 1394 virtual network assigned to each row. In Fig. 5, the serial number of single digit (integral number) is assigned to each row as the node ID 101A. Needless to say, the number of digit as for the value of this node ID 101A may be arbitrary, or instead of the number, the value may be formed by the character or symbol or in proper combination of the both. For example, the Node_ID of 6 bits defined in the standard of the IEEE 1394, which is used in the local network, may be used as the node ID 101A.

The bridge ID 101B is the identification information (bridge ID) for identifying each corresponding bridge which belongs to the IEEE 1394 network including the respective rows (nodes) as the local network and for example, it is formed by the MAC address (Media Access Control address) and the like. The bridge ID 101B indicates which bridge each node actually corresponds to (which local network this node is in).

The local flag 101C is a flag for judging whether or not each node corresponding to each row is the node of the current local network (of the bridge holding this address conversion table). When the value of the flag is "1", the node corresponding to the row is the node of the local network corresponding to this bridge, and when the value of the flag is "0", the node corresponding to the row is the node of the other local network of the other bridge.

The bridge local node ID 101D is the ID inherent to every bridge (ID assigned to each node recognizably only within each IEEE 1394 network). The information to be registered as the bridge local node ID 101D may be arbitrary as far as it is the ID assigned to each node, and its assignment method may be arbitrary.

The IEEE 1394 PHY 55 of Fig. 3 will be described next. Fig. 6 is a block diagram showing the detailed constitutional example of the IEEE 1394 PHY 55 (the IEEE 1394 PHY 55 of the bridge 11) in Fig. 3.

In Fig. 6, the IEEE 1394 PHY 55 includes an IEEE 1394 physical layer controller 121 for data transmission and reception (hereinafter referred to as IEEE 1394 PHY 121), an IEEE 1394 physical layer controller 122 for local bus initialization to an IEEE 1394 physical layer controller 126 for local bus initialization (hereinafter, referred to as IEEE 1394 PHY 122 to IEEE 1394 PHY 126), and an IEEE 1394 control clock supplying unit 127.

The IEEE 1394 PHY 121 to the IEEE 1394 PHY 126 perform the controlling processing of physical layer in the IEEE 1394 network such as transmission and reception of signals, automatic detection of transfer speed, address assignment, and the like.

As described with reference to Fig. 3, the IEEE 1394 PHY 121 is connected to the IEEE 1394 port 42 through the bus 64, hence to control the data transfer among the IEEE 1394 node 31 to the IEEE 1394 node 33 which are connected together through the IEEE 1394 port 42. Namely, the IEEE 1394 PHY 121 supplies the data received from the IEEE 1394 Link 54, to the IEEE 1394 node 31 to the IEEE 1394 node 33 and supplies the data received from the IEEE 1394 node 31 to the IEEE 1394 node 33, to the IEEE 1394 Link 54.

The IEEE 1394 PHY 122 to the IEEE 1394 PHY 126 are connected to the IEEE 1394 PHY 121 through the bus 131 to the bus 135 (daisy chain connection) and they operate as dummy nodes corresponding to the respective nodes (for example, in the case of the system of Fig. 1, the IEEE 1394 node 34 to the IEEE 1394 node 36) belonging to the other IEEE 1394 network (the network other than the network which this belongs to, of the IEEE 1394 networks collectively regarded as one IEEE 1394 virtual network: for example, in the case of the system of Fig. 1, the IEEE 1394 network 3 and the IEEE 1394 network 4 (other than the IEEE 1394 network 2 which the bridge 11 belongs to)), for the use of configuration of the IEEE 1394 virtual network in the initialization processing.

The IEEE 1394 PHY 122 to the IEEE 1394 PHY 126 are connected to the bridge controller 52 through the bus 69. Specifically, the IEEE 1394 PHY 122 is connected to the bridge controller 52 through the bus 69A, the IEEE 1394 PHY 123 is connected to the bridge controller 52 through the bus 69B, the IEEE 1394 PHY 124 is connected to the bridge controller 52 through the bus 69C, the IEEE 1394 PHY 125 is connected to the bridge controller 52 through the bus 69D, the IEEE 1394 PHY 126 is connected to the bridge controller 52 through the bus 69E, and the bridge controller 52 controls the individually. For example, in the initialization processing of the IEEE 1394 network 2, the bridge controller 52 sets "active" or "inactive" in each of the IEEE 1394 PHY 122 to the IEEE 1394 PHY 126 through each of the bus 69 (the bus 69A to the bus 69E) so as to make the IEEE 1394 PHY 122 to the IEEE 1394 PHY 126 respectively correspond to the nodes of the other IEEE 1394 network. In other words, the bridge controller 52 conforms the structure of the IEEE 1394 PHY 122 to the IEEE 1394 PHY 126 as the dummy nodes to the structure of the other actual nodes (the IEEE 1394 node 34 to the IEEE 1394 node 36).

Of the IEEE 1394 PHY 122 to the IEEE 1394 PHY 126, that one set at the "active" dummy node is used for the configuration of one virtual IEEE 1394 network by taking part in the initialization processing of the IEEE 1394 network 2, similarly to the actual node (for example, in the case of the system of Fig. 1, the IEEE 1394 node 31 to the IEEE 1394 node 33).

Namely, the bridge controller 52 sets some of the IEEE 1394 PHY 122 to the IEEE 1394 PHY 126, for the necessary number, "active" as the dummy node, so that the same dummy node (active dummy node) takes part in the following bus initialization processing, and as the result, the virtual network is configured.

Since the IEEE 1394 PHY 122 to the IEEE 1394 PHY 126 are originally dummy nodes, they are not used at the actual data transmission and reception, but the IEEE 1394 Link 54 transmits the data destined for these nodes to the other IEEE 1394 network through the bridge controller 52.

The above-mentioned IEEE 1394 PHY 121 to IEEE 1394 PHY 126 obtain a controlling clock signal of a predetermined frequency generated in the IEEE 1394 control clock supplying unit 127 through the bus 136 and operate at the timing based on the clock signal.

The above-mentioned description of the bridge 11 can be applied also to the bridge 12 and the bridge 13.

A flow of the specific processing about the configuration of the IEEE 1394 virtual network will be described. The configuration of the IEEE 1394 virtual network is performed at the time of initialization of the IEEE 1394 network 2 to the IEEE 1394 network 4 that are the local networks, in other words, when the bridge 11 to the bridge 13 are initialized. These bridges are not always initialized at the same time. Specifically, for example, when one of the bridge 11 to the bridge 13 starts the initialization processing, the other bridges perform the initialization processing correspondingly.

As a factor that the bridge 11 to the bridge 13 start the initialization processing, there are the case where the IEEE 1394 network that is the local network is updated and the case where the other bridges start the initialization processing in addition to the case where one bridge is connected to the Ethernet network that is the global network. In below, the bridge initialization processing performed by the bridge 11 in each of the above cases will be described.

For example, when a new IEEE 1394 node is connected to the IEEE 1394 network 2 that is the local network of the bridge 11 or the connected IEEE 1394 node is removed therefrom, since the topology changes, reconfiguration processing of the topology is performed in the physical layer of the IEEE 1394 network 2, when three process steps of initialization of bus, recognition of tree, and self-recognition are sequentially performed. When the initialization process of bus starts, each of the IEEE 1394 node 31 to the IEEE 1394 node 33, performing the output of a bus-reset signal, supplies the value "1" from each predetermined signal line (for example, TPA (Arb_A) and TPB (Arb_B)) mutually independently. Upon completion of the reset of the buses, the process moves to the next tree recognition process, where each node recognizes the tree through the hand shake process between father and son, the route competition process, and the like. Upon completion of the tree recognition process, it moves to the self-recognition process, where each node is recognized. According to this process, the topology of the IEEE 1394 network 2 is reconfigured.

When the IEEE 1394 PHY 121 (Fig. 3) of the bridge 11, starting the reconfiguration of the topology in the local network, detects the bus reset within the local network, the bridge controller 52 performs the bridge initialization processing in order to reconfigure the topology of the IEEE 1394 virtual network.

The bridge initialization processing in the case of detecting the bus rest within the self-local network will be described with reference to the flow chart of Fig. 7.

The bridge controller 52 detecting the bus reset controls the IEEE 1394 Link 54 so as to monitor the local network and wait until the topology of the IEEE 1394 network 2 is reconfigured, and when the topology is judged to be reconfigured, it detects the number of nodes of the local network (IEEE 1394 network 2) in the reconfigured topology in Step S1.

The bridge controller 52 proceeds to the processing in Step S2, where it judges whether or not there exists an active connection in the Ethernet port 41 (Fig. 2) through the control on the Ethernet interface 51 through the bus 67. As the example of Fig. 1, the hub 14 is connected there through the Ethernet cable, and when it judges that there exists an active connection in the Ethernet port 41, the bridge controller 52 proceeds to the processing in Step S3, where according to the number of the detected nodes, it creates an initialization request packet for requiring the other bridge the initialization processing of the local network.

Fig. 8 is a schematic view showing the constitutional example of the initialization request packet created by the bridge controller 52.

In Fig. 8, the initialization request packet 140 is a packet to be sent to the Ethernet network 1 and formed as the Ethernet frame. Specifically, the initialization request packet 140 includes preamble 141, header 142, packet data 143, and FCS (Frame Check Sequence) 144.

The header 142 includes destination address 151, source address 152, and data length 153. The destination address 151 includes the address information of a device (for example, the MAC address of the device) that would be the destination of the initialization request packet 140. Since the initialization request packet 140 is usually broadcasted, the destination address 151 comes to the value indicating that this destination address 151 is for broadcast (the value with no specification of destination, for example, "FF-FF-FF-FF-FF-FF"). The source address 152 includes the address information of a bridge that will transmit this initialization request packet 140 (for example, the MAC address of the bridge). The data length 153 includes the data size (data length) of this initialization request packet 140.

The packet data 143 is the transmission data this Ethernet frame carries. In the case of the usual Ethernet network, the packet data 143 is formed by the IP packet. This initialization request packet 140 is a packet for transferring the data communicated between the bridges (bridge 11 to bridge 13). Accordingly, the packet data 143 is formed by the bridge protocol payload. Specifically, the packet data 143 includes packet type 154 and node number 155. The packet type 154 includes the information for identifying the type of a packet in the field of two bytes. In the case of the initialization request packet 140, the value of the packet type 154 comes to "0x0001". The node number 155 is a field of two byes and it means the number of the nodes within the local network corresponding to the source bridge (for example, in the case of the bridge 11 of Fig. 1, "3", the number of the nodes within the IEE 1394 network 2). The bridge controller 52 creates the initialization request packet 140 by using the information about the number of the nodes obtained in Step S1 as the node number 155.

Returning to Fig. 7, when creating this initialization request packet, the bridge controller 52 proceeds to the processing of Step S4, where it supplies the created initialization request packet 140 to the Ethernet interface 51 and broadcasts the initialization request packet 140 to the global network (Ethernet network 1) according to the control toward the Ethernet interface 51. The other bridge to which the initialization request packet 140 is supplied performs the initialization processing of the corresponding local network based on the request, as described later. When reconfiguring the topology of the local network, the bridge creates a bridge information packet and broadcasts it to the global network (Ethernet network 1). In Step S5, the bridge controller 52 receives the bridge information packet supplied from the other bridge, for a predetermined time, according to the control toward the Ethernet interface 51.

Since the structure of this bridge information packet is basically the same as that of the initialization request packet 140 shown in Fig. 8, its description is omitted, but the source address 152 is formed by the MAC address of the bridge that transmits the bridge information packet and the value of the packet type 154 is set at "0x0002". The node number 155 includes the information about the number of the nodes within the local network of the bridge transmitting the bridge information packet.

Namely, the bridge 11 to the bridge 13 exchange the initialization request packets and the bridge information packets with each other, thereby exchanging the information about the node number of each local network.

Returning to Fig. 7, after elapse of a predetermined time set in order to accept the bridge information packet, the bridge controller 52 proceeds to the processing of Step S6, where it judges whether the bridge information packet is obtained or not. When it judges that the bridge information packet is obtained in this predetermined time through the Ethernet interface 51, the bridge controller 52 proceeds to the processing of Step S7, where it updates the bridge database 81 held by the bridge database holding unit 58 (when it holds nothing, it configures it newly) according to the obtained bridge information packet and performs the dummy node setting processing for controlling the IEEE 1394 PHY 55. The details of the dummy node setting processing will be described. Upon completion of the dummy node setting processing, the bridge controller 52 waits until the given timing previously set in Step S8 (for example, until 1000 mm seconds' elapse since the initialization request packet was broadcasted in Step S4). This is because the bus reset processing of the local networks is started at once in all the bridges (the bridge 11 to the bridge 13) connected to the Ethernet network 1 that is the global network. Namely, the respective bridges finish the processing of Step S5 to Step S7 by the predetermined timing.

When it is at the predetermined timing, the bridge controller 52 proceeds to the processing of Step S9, where it controls the IEEE 1394 PHY 121 through the IEEE 1394 Link 54 so that it performs the bus reset processing and configures the topology of the IEEE 1394 virtual network including the dummy nodes set in Step S7. Namely, through the bus reset processing, each node ID is attached to not only the IEEE 1394 node 31 to the IEEE 1394 node 33 but also the dummy nodes.

Upon completion of the processing of Step S9, the bridge controller 52 proceeds to the processing of Step S10, where it performs the address conversion table configuration processing, according to the bridge database 81 held by the bridge database holding unit 58 and configures the address conversion table 101 (Fig. 5). The details of the address conversion table configuration processing will be described. The address conversion table 101 configured in Step S11 is supplied to the address conversion table holding unit 59 and stored there, and in Step S12, the ordinary bridge processing is started by using the address conversion table and the bridge initialization processing is finished.

When the bridge controller 52 judges that there is no active connection in the Ethernet port 41 in Step S2, in other words, that the bridge 11 is not connected to the Ethernet network 1, since the bridge controller 52 cannot configure the virtual network (do not have to do), it finishes the bridge initialization processing.

When it judges that no bridge information packet is obtained in Step S6, in other words, that no other bridge than this bridge 11 is connected to the Ethernet network 1, since the bridge controller 52 cannot configure the virtual network (do not have to do), it finishes the bridge initialization processing.

As mentioned above, through the bridge initialization processing, the bridge controller 52 can reconfigure the virtual network (IEEE 1394 virtual network) easily even when the topology of the local network (IEEE 1394 network 2) changes because a new node is connected or a connection to some node is broken. In other words, the bridge controller 52 virtually combines with each other the IEEE 1394 network 2 to the IEEE 1394 network 4 connected through the Ethernet network 1, hence to configure the IEEE 1394 virtual network in a wider range beyond the restricted range (distance) of the IEEE 1394 standard, where the nodes of the respective networks are defined as its nodes.

The details of the dummy node setting processing performed in Step S7 in Fig. 7 will be described with reference to the flow chart of Fig. 9, this time.

At first, the bridge controller 52, starting the dummy node setting processing after obtaining the bridge information packet (Step S6 in Fig. 7), controls the IEEE 1394 PHY 55 through the bus 69, so as to set all the dummy nodes at a non-active state in Step S21. For example, in the case of Fig. 6, the bridge controller 52 sets the respective operation states of the IEEE 1394 PHY 122 to the IEEE 1394 PHY 126 non-active through the bus 69A to the bus 69D. Namely, the bridge controller 52 initializes the setting about the dummy nodes of the respective IEEE 1394 PHYs in Step S21.

After setting all the dummy nodes non-active, the bridge controller 52 proceeds to the processing of Step S22, where it updates the values of the respective records (in the case of Fig. 4, the record 91 to the record 93) of the bridge database 81 (Fig. 4) held by the bridge database holding unit 58 into the latest state, according to the values of the source address 152, the node number 155, and the like included in the bridge information packet, with reference to the bridge information packet accepted through the processing of Step S5 in Fig. 7. When the bridge database holding unit 58 does not hold the bridge database 81, the bridge controller 52 newly configures the bridge database 81. In Step S23, according to the node number 81D and the like of the updated bridge database 81, it sets the necessary number of the IEEE 1983 PHYs active as the dummy nodes and finishes the dummy node setting processing. Upon completion of the dummy node setting processing, the bridge controller 52 returns the processing to Step S7 in Fig. 7 and resumes the bridge initialization processing from a state of finishing the processing of Step S7 and proceeds to the processing of Step S8.

Through the dummy node setting processing in this way, the bridge controller 52 can update the bridge database according to the bridge information packet supplied from the other bridge and set the dummy nodes based on the updated information of the bridge database. Thus, the bridge controller 52 can configure the IEEE 1394 virtual network according to the latest information of the respective IEEE 1394 networks.

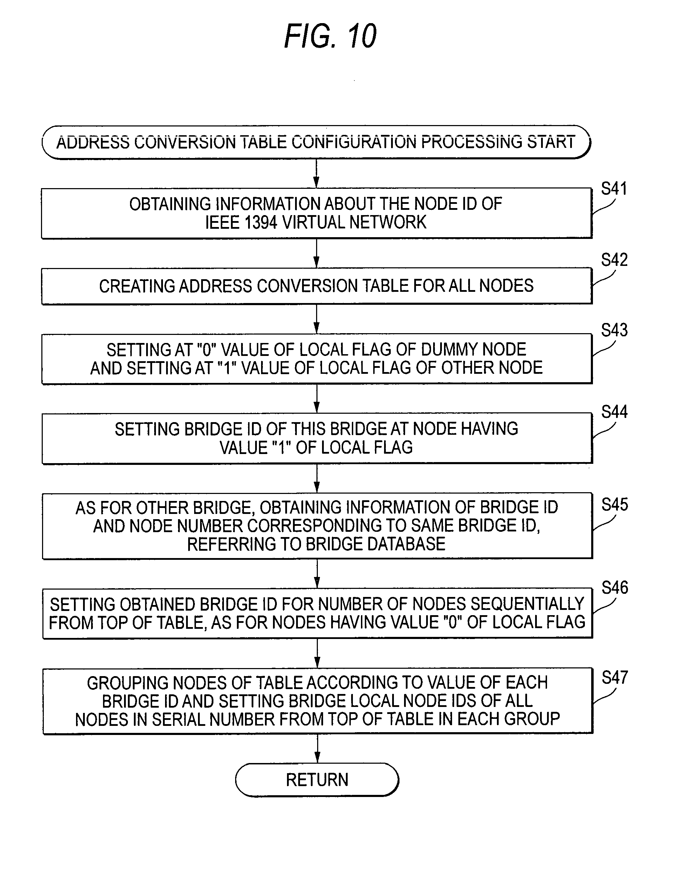

The details of the address conversion table configuration processing performed in Step S10 of Fig. 7 will be described with reference to the flow chart of Fig. 10.

After starting the address conversion configuration processing, the bridge controller 52 first controls the LEEE 1394 Link 54 in Step S41 so as to obtain the information about the node IDs of the IEEE 1394 virtual network configured through the bus reset processing in Step S9. The bridge controller 52 creates the address conversion table 101 for all the nodes in Step S42 according to the obtained information about the node IDs of the respective nodes. In short, the bridge controller 52 creates the address conversion table 101 for the lines as many as the number of the obtained node IDs.

After creating the address conversion table 101, the bridge controller 52 sets at "0" the value of the local flag 101C in each corresponding line in which the value of the node ID 101A (node ID) means the dummy node and sets at "1" the value of the local flag 101C in each line corresponding to the other nodes (the IEEE 1394 nodes within the local networks).

In Step S44, the bridge controller 52 sets the bridge ID (the MAC address of the bridge 11, and for example, in the case of Fig. 5, "01-23-45-67-AA-A1" ) of this bridge (the bridge 11) at the line (node) whose value is "1".

In Step S45, the bridge controller 52 gains access to the bridge database holding unit 58, and obtain all the information of each bridge ID and its corresponding node number as for the other bridges (the bridge 12 and the bridge 13) with reference to the bridge database 81. For example, in the case of the bridge database 81 of Fig. 4, the bridge controller 52 obtains the information that the node number in the local network of the bridge having the bridge ID "01-23-45-67-BB-B1" is "2" and that the node number in the local network of the bridge having the bridge ID "01-23-45-67-CC-C1" is "1" according to the record 92 and the record 93 of the other bridges (the bridges having the value "0" of the local bridge flag 81C).

The bridge controller 52 proceeds to the processing of Step S46, where it sets the obtained bridge ID in the line (node) having the value "0" of the local flag 101C, for the number of the corresponding nodes, in the descending order of the address conversion table 101. In the case of Fig. 5, the value of the local flag 101C is "0" in the line 112 having the value "1" of the node ID 101A , the line 115 having the value "4" of the node ID 101A, and the line 116 having the value "5" of the node ID 101A. Accordingly, the bridge controller 52 sets the bridge ID obtained in Step S45 in these lines (line 112, line 115, and line 116). The bridge controller 52 sets the bridge ID "01-23-45-67-BB-B1" as the bridge ID 101B in the line 112 and the line 115 and sets the bridge ID "01-23-45-67-CC-C1" as the bridge ID 101B in the line 116.

After setting the bridge ID 101B, the bridge controller 52 proceeds to the processing of Step S47, where it groups the lines (nodes) of the address conversion table 101 under the value of the bridge ID 101B set in Step S44 or Step S46 and in each group of the lines having the same bridge ID 101B value, it sets the bridge local node IDs 101D of all the lines belonging to the same group by the serial number (through number of the inter) sequentially from the top of the address conversion table 101. For example, in the case of Fig. 5, the bridge controller 52 sequentially sets the values of the bridge local node ID 101D in the line 111, the line 113, and the line 114 having the same bridge ID 101B at "0", "1", and "2" and sequentially sets the values of the bridge local node ID 101D in the line 112 and the line 115 having the same bridge ID 101B at "0" and "1", and further sets the value of the bridge local node ID 101D in the line 116 at "0".

When the bridge local node IDs 101D are set as mentioned above, the bridge controller 52 finishes the address conversion table configuration processing. Upon completion of the address conversion table configuration processing, the bridge controller 52 returns the processing to Step S10 in Fig. 7, where it resumes the bridge initialization processing from a state of finishing the processing of Step S10 and proceeds to the processing of Step S11.

By performing the address conversion table configuration processing in this way, the bridge controller 52 can create the address conversion table 101 based on the latest information of the table database 81. Thus, the bridge controller 52 can perform the address conversion processing correctly.

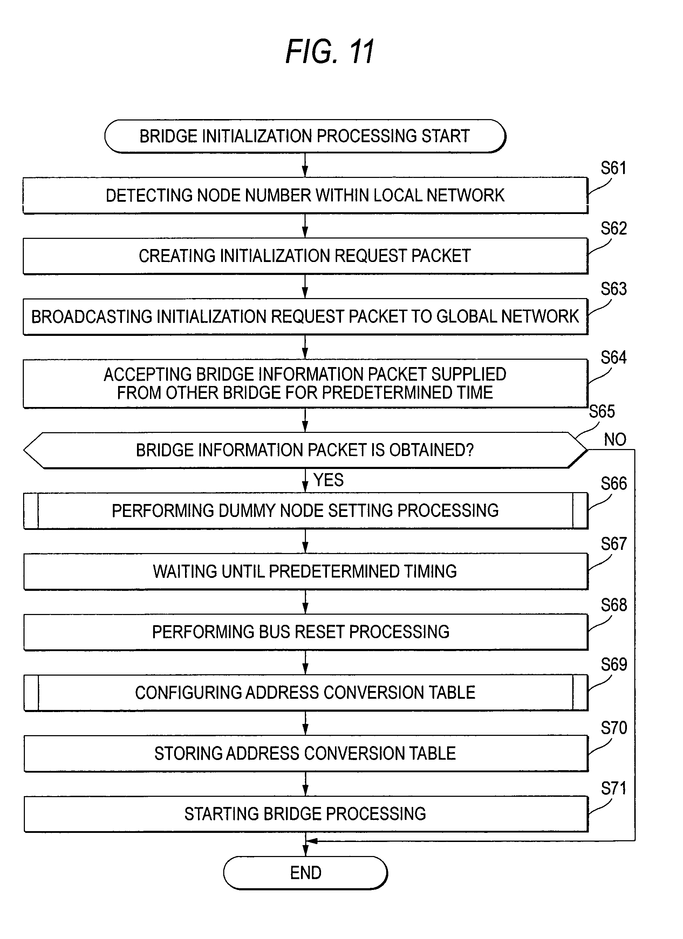

The bridge initialization processing when the bridge 11 is connected to the Ethernet network 1, in other words, when the active connection is detected in the Ethernet port 41 (Fig. 2) will be described with reference to the flow chart of Fig. 11.

The bridge initialization processing in this case is performed basically in the same processing as in the case of Fig. 7, and in this case, however, since it is apparent that there exists an active connection in the Ethernet port 41, differently from the case of Fig. 7, the processing of Step S2 in Fig. 7 is omitted.

More specifically, when the bridge 11 is connected to the Ethernet network 1, the bridge controller 52 of the bridge 11 controls the IEEE 1394 PHY 121 through the IEEE 1394 Link 54, so as to start the reconfiguration processing (configuration) of the topology in the physical layer of the IEEE 1394 network 2 that is the local network.

In order to reconfigure the topology of the IEEE 1394 virtual network, the bridge controller 52 performs the bridge initialization processing and controls the IEEE 1394 Link 54, so as to monitor the local network and wait until the topology of the IEEE 1394 network 2 is reconfigured, and when it judges that the topology is reconfigured, it detects the node number of the local network (IEEE 1394 network 2) in the reconfigured topology.

Upon detection of the node number of the local network, the bridge controller 52 omits the connection confirming processing of the Ethernet port 41 (the processing corresponding to Step S2 in Fig. 7), creates the initialization request packet 140 (Fig. 8) requiring the other bridge the initialization processing of the local network, in Step S62, based on the node number detected in Step S61, supplies the created initialization request packet 140 to the Ethernet interface 51, and controls the Ethernet interface 51, so as to broadcast the initialization request packet 140 to the global network (Ethernet network 1) in Step S63.

The other bridges provided with the initialization request packet 140 perform the initialization processing of the respective local networks according to the request, described later. When each of the bridges reconfigures the topology of the local network, it creates the bridge information packet and broadcasts it to the global network (Ethernet network 1).

The bridge controller 52 controls the Ethernet interface 51 so as to receive the bridge information packet supplied from the other bridge for a predetermined time in Step S64, and when the predetermined time set in order to accept the bridge information packet passes, the bridge controller 52 proceeds to the processing of Step S65, where it judges whether the bridge information packet has been obtained or not.

When judging that the bridge information packet has been obtained through the Ethernet interface 51 in this predetermined time, the bridge controller 52 proceeds to the processing of Step S66, where it performs the dummy node setting processing as described with reference to the flow chart of Fig. 9. Upon completion of the dummy node setting processing, the bridge controller 52 waits until the predetermined timing previously set in Step S67 (for example, until 1000 mm seconds' elapse since the initialization request packet was broadcasted in Step S63).

When it is at the predetermined timing, the bridge controller 52 proceeds to the processing of Step S68, where it controls the IEEE 1394 PHY 121 through the IEEE 1394 Link 54 so as to perform the bus reset processing of the local network (IEEE 1394 network 2) and configure the topology of the IEEE 1394 virtual network including the dummy nodes set through the processing of Step S66.

Upon completion of the processing of Step S68, the bridge controller 52 proceeds to the processing of Step S69, where it performs the address conversion table configuration processing as described with reference to the flow chart of Fig. 10, according to the bridge database 81 held by the bridge database holding unit 58 and configures the address conversion table 101 (Fig. 5). In Step S70, it supplies the configured address conversion table 101 to the address conversion table holding unit 59 and stores it there, and in Step S71, it starts the ordinal bridge processing by using the address conversion table 101 and finishes the bridge initialization processing.

In Step S65, when it judges that the bridge information packet has not been obtained, namely, when the other bridge than this bridge 11 is not connected to the Ethernet network 1, since the bridge controller 52 cannot configure the virtual network (don't have to do), it finishes the bridge initialization processing.

Through the bridge initialization processing, the bridge controller 52 can configure the virtual network (IEEE 1394 virtual network) easily when the bridge 11 is connected to the Ethernet network 1. Namely, the bridge controller 52 virtually combines with each other the IEEE 1394 network 2 to the IEEE 1394 network 4 connected through the Ethernet network 1, hence to configure the IEEE 1394 virtual network in a wider range beyond the restricted range (distance) of the IEEE 1394 standard, where the nodes of the respective networks are regarded as its nodes.

In the above, although the bridge initialization processing by the bridge 11 has been described with reference to the flow charts of Fig. 7 and Fig. 11, also the bridge 12 and the bridge 13 perform the same bridge initialization processing as in the case of the bridge 11. Needless to say, the dummy node setting processing described with reference to the flow chart of Fig. 9 and the address conversion table configuration processing described with reference to the flow chart of Fig. 10 are the same, and in either case of the bridge 12 and the bridge 13, the above description can be applied. Accordingly, the description of the processing is omitted.

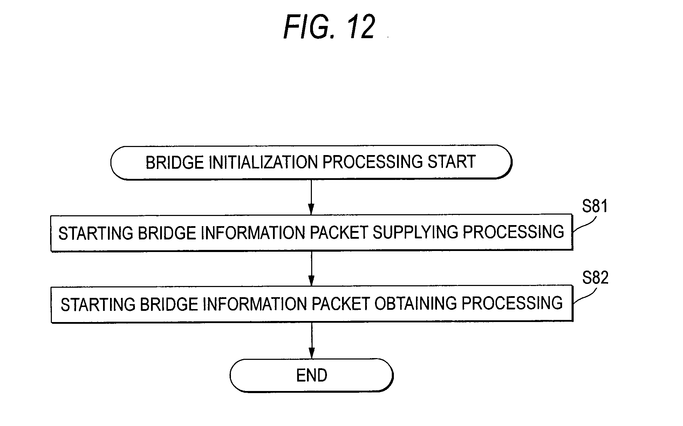

The bridge initialization processing of the other bridge when the initialization request packet is supplied through the bridge initialization processing will be described with reference to the flow chart of Fig. 12.

Upon acquisition of the initialization request packet, the bridge controller 52 of the bridge 11 starts the reconfiguration processing (configuration) of the topology in the physical layer of the IEEE 1394 network 2 that is the local network, according to the request of the initialization request packet.

The bridge controller 52 controls the IEEE 1394 Link 54 so as to monitor the local network and wait until the topology of the IEEE 1394 network 2 is reconfigured, and when it judges that the topology is reconfigured, it starts the bridge supplying processing that is the processing for supplying the created bridge information packet to the other bridge, in Step S81 of Fig. 12, and it starts the bridge information obtaining processing that is the processing for obtaining the bridge information packet supplied from the other bridge in Step S82, hence to finish the bridge initialization processing.

The bridge controller 52 performs the bridge information packet supplying processing and the bridge information packet obtaining processing in parallel, as the bridge initialization processing.

According to this, the bridge controller 52 can accept the bridge information packet supplied from the other bridge while creating the bridge information packet.

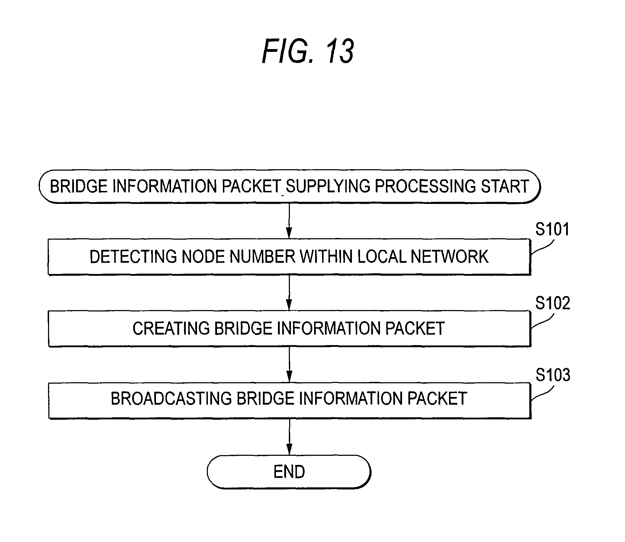

The details of the bridge information packet supplying processing started in Step S81 of Fig. 12 will be described with reference to the flow chart of Fig. 13.

At first, the bridge controller 52 controls the IEEE 1394 Link 54 so as to detect the node number within the local network (IEEE 1394 network 2) in Step S101, creates the bridge information packet based on the information about the node number in Step S102, and broadcasts the created bridge information packet to the Ethernet network 1 through the Ethernet interface 51 in Step S103. When it broadcasts the bridge information packet to the Ethernet network 1 that is the global network, the bridge controller 52 finishes the bridge information packet supplying processing.

According to this, the bridge controller 52 can supply the information about the node of the IEEE 1394 network 2 that is the local network of the bridge 11 to the other bridge as the bridge information packet.

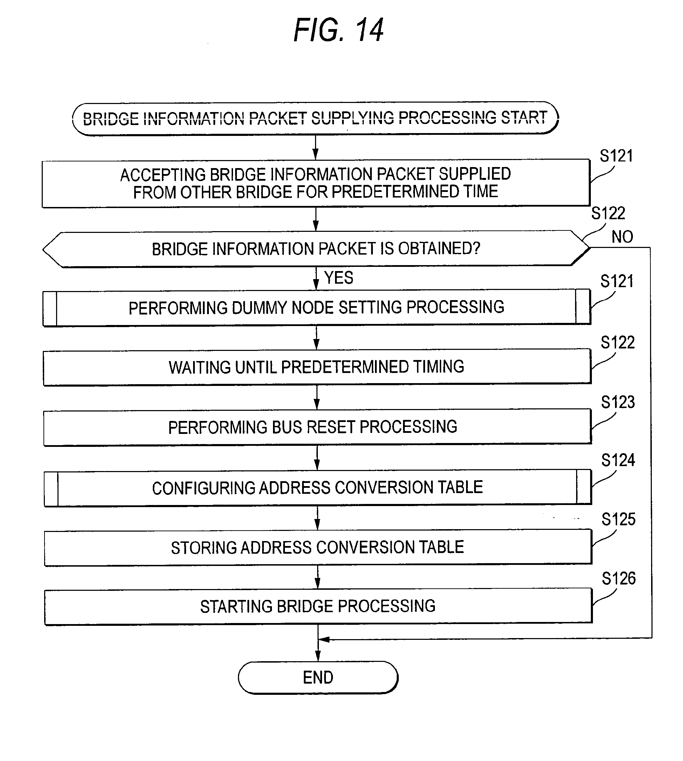

The details of the bridge information packet obtaining processing performed in parallel with the bridge information packet supplying processing, which is started in Step S82 of Fig. 12, will be described with reference to the flow chart of Fig. 14.

The bridge controller 52 controls the Ethernet interface 51 so as to accept the bridge information packet supplied from the other bridge for a predetermined time in Step S121, and when the predetermined time set in order to accept the bridge information packet passes, it proceeds to the processing of Step S122, where it judges whether the bridge information packet has been obtained or not.

When it judges that the bridge information packet has been obtained through the Ethernet interface 51 in this predetermined time, the bridge controller 52 proceeds to the processing of Step S123, where it performs the dummy node setting processing as having been described with reference to the flow chart of Fig. 9. Upon completion of the dummy node setting processing, the bridge controller 52 waits until a predetermined timing previously set in Step S124 (for example, until 1000 mm seconds' elapse since the bridge information packet obtaining processing was started).

When it is at the predetermined timing, the bridge controller 52 proceeds to the processing of Step S 125, where it controls the IEEE 1394 PHY 121 through the IEEE 1394 Link 54 so as to perform the bus reset processing of the local network (IEEE 1394 network 2) and configure the topology of the IEEE 1394 virtual network including the dummy nodes set in the processing of Step S123.

Upon completion of the processing of Step S125, the bridge controller 52 proceeds to the processing of Step S126, where it configures the address conversion table 101 (Fig. 5) according to the bridge database 81 held by the bridge database holding unit 58, supplies the configured address conversion table 101 to the address conversion table holding unit 59 and stores it there in Step S127, and starts the ordinal bridge processing by using the address conversion table 101 in Step S128, hence to finish the bridge initialization processing.

When it judges that the bridge information packet has not been obtained in Step S122, in other words, when the other bridge than this bridge 11 is not connected to the Ethernet network 1, since the bridge controller 52 can't configure the virtual network (don't have to do), it finishes the bridge initialization processing.

As mentioned above, by performing the bridge information packet obtaining process and the bridge information packet supplying processing in parallel, the bridge controller 52 obtains the bridge information packet supplied from the other bridge while creating the bridge information packet, hence to configure the virtual network (IEEE 1394 virtual network) easily according to the obtained bridge information packet. Namely, the bridge controller 52 virtually combines with each other the IEEE 1394 network 2 to the IEEE 1394 network 4 connected through the Ethernet network 1 even when the initialization request packet is created in the other bridge, hence to configure the IEEE 1394 virtual network in a wider range beyond the restricted range (distance) of the IEEE 1394 standard, where the nodes of the respective networks are defined as its nodes.

In the above, although the bridge initialization processing by the bridge 11 has been described, also the bridge 12 and the bridge 13 perform the same bridge initialization processing as in the case of the bridge 11. Accordingly, the description of the same processing is omitted.

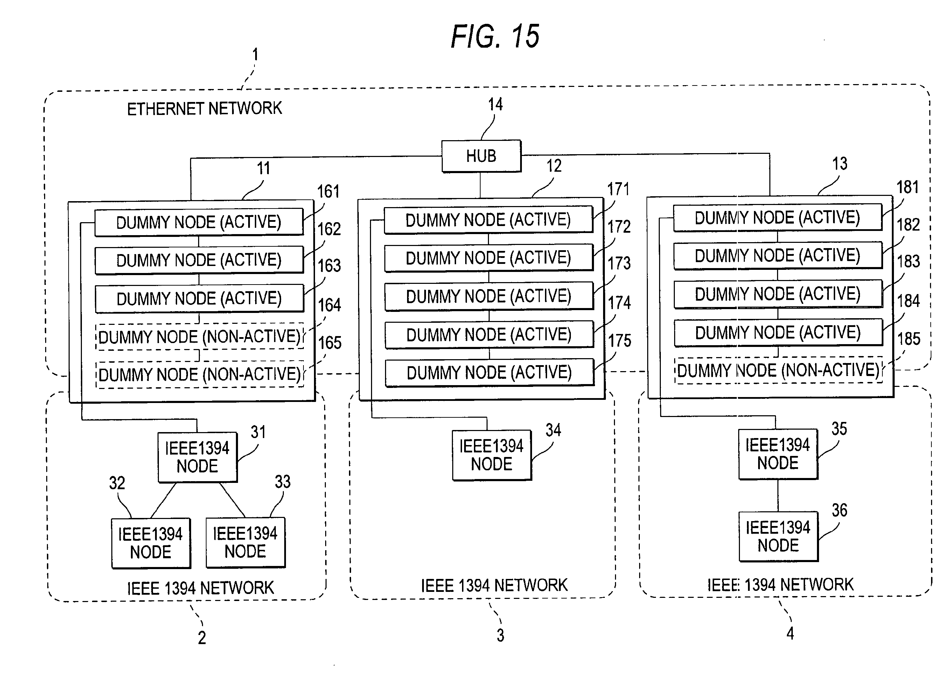

In the bridge initialization processing as mentioned above, the bridge 11 to the bridge 13 connected to the Ethernet network 1 set the dummy nodes as mentioned above, in order to configure the IEEE 1394 virtual network. For example, in the case of the network system shown in Fig. 1, the setting of the dummy nodes in each bridge is as shown in Fig. 15.

Namely, since the IEEE 1394 network 2 that is the local network of the bridge 11 has three nodes; the IEEE 1394 node 31 to the IEEE 1394 node 33, the bridge 11 sets three dummy nodes 161 to 163 active and the remaining two dummy nodes 164 and 165 non-active.

The bridge 12 sets five dummy nodes 171 to 175 all active since the IEEE 1394 network 3 that is its local network has one node, the IEEE 1394 node 34.

The bridge 13 sets four dummy nodes 181 to 184 active and the remaining one dummy node 185 non-active since the IEEE 1394 network 4 that is its local network has two nodes; the IEEE 1394 node 35 and the IEEE 1394 node 36.

According to this setting, the bridge 11 to the bridge 13 can configure the IEEE 1394 virtual network with the IEEE 1394 node 31 to the IEEE 1394 node 36 as its nodes.

For example, the bridge 11 sets the dummy node 161 to the dummy node 163 active in the IEEE 1394 network 2, hence configure the IEEE 1394 virtual network 191 as shown in Fig. 16. In this IEEE 1394 virtual network 191, the dummy node 161 corresponding to the IEEE 1394 node 34 is connected to the IEEE 1394 node 31 and the dummy node 162 corresponding to the IEEE 1394 node 35, the IEEE 1394 node 31 is further connected to the IEEE 1394 node 32 and the IEEE 1394 node 33, and the dummy node 162 is further connected to the dummy node 163 corresponding to the IEEE 1394 node 36.

Similarly, the bridge 12 and the bridge 13 also set the dummy nodes corresponding to the other IEEE 1394 networks respectively based on the information of the bridge database and each can configure the IEEE 1394 virtual network constituted in the same way as the IEEE 1394 virtual network 191 shown in Fig. 16, by using the dummy nodes. Namely, each bridge can configure the IEEE. 1394 virtual network in common and configure the IEEE 1394 virtual network in a wider range of connection beyond the restricted range (distance) of the IEEE 1394 standard.

The data transfer in the IEEE 1394 virtual network configured in the above will be described, this time.

In the IEEE 1394 virtual network, although each node transmits the IEEE 1394 packet to any node in the same way as in the ordinal IEEE 1394 network, when the source node and the destination node belong to the different networks, in fact, the data (IEEE 1394 packet) is transmitted from the network including the source node, to the network including the destination node, through the Ethernet network 1. At that time, the bridge performs the relay processing between the local network and the global network.

For example, the bridge 11 monitors the IEEE 1394 packets transmitted by the IEEE 1394 node 31 to the IEEE 1394 node 33 of the IEEE 1394 network 2 that is the local network. For example, when the IEEE 1394 node 31 transmits the IEEE 1394 packet, the bridge 11 obtains the packet and judges whether the packet is destined for the dummy node or not. When the destination is the dummy node, for example, when the destination node is specified at the IEEE 1394 node 34 of the IEEE 1394 network 3 that is the local network of the bridge 12, the bridge 11 converts the IEEE 1394 packet supplied by using the address conversion table 101 into the Ethernet packet and transmits it to the Ethernet network 1.

At that time, on the Ethernet network 1, the Ethernet packet is transferred from bridge to bridge. Accordingly, this Ethernet packet is a packet for communication between the bridges and formed as a bridge protocol frame that is a frame based on the protocol between the bridges.

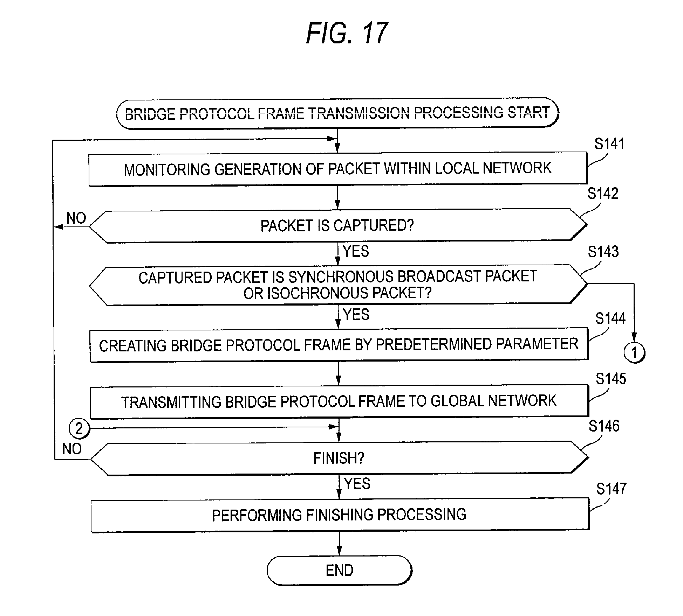

Namely, each of the bridges performs the bridge protocol frame transmission processing for creating a bridge protocol frame depending on necessity and for transmitting it according to the destination of the packet transmitted from the node of the local network. The bridge protocol frame transmission processing performed by the bridge 11 will be described with reference to the flow charts of Fig. 17 and Fig. 18.

At first, the bridge controller 52 controls the IEEE 1394 Link 54, so as to monitor the generation of a packet within the local network (specifically, the IEEE 1394 packet transmitted from one of the IEEE 1394 node 31 to the IEEE 1394 node 33 within the IEEE 1394 network 2) in Step S141, to judge whether the packet is captured or not in Step S142, to return the processing to Step S141 until the packet is judged to be captured, and to repeat the processing thereafter. Namely, the bridge controller 52 keeps monitoring the generation of a packet within the local area until it judges that the packet generated within the local network has been captured.

When it judges that the packet has been captured in Step S142, the IEEE 1394 Link 54 controlled by the bridge controller 52 proceeds to the processing of Step S143, where it judges whether the captured packet (packet to transmit) is an asynchronous broadcast packet that is a packet to be transmitted to unspecified number of destinations (broadcasted) in an asynchronous method of not assuring the transfer rate or an isochronous packet that is a packet to be transmitted in an isochronous method of assuring the real time quality after transfer processing at a predetermined cycle (for example, 8 kHz).

The transfer of the asynchronous method is referred to as an asynchronous transfer and the transfer of the isochronous method is referred to as an isochronous transfer (synchronous transfer). Here, the "asynchronous" and "synchronous" are to indicate whether the repetition of the transfer processing in a predetermined cycle is assured or not and not to indicate the presence of a clock controlling the operation timing of the transfer processing. Accordingly, even in either case of the asynchronous transfer and the isochronous transfer, the transfer processing is performed in synchronization with the control clock (namely, in the case of the asynchronous transfer, a packet is always transferred in synchronization with the control clock but the transfer intervals of each packet is not always constant).

When it judges the captured packet to be the asynchronous broadcast packet or the isochronous packet in Step S143, the IEEE 1394 Link 54 controlled by the bridge controller 52 supplies the packet to the bridge controller 52. The bridge controller 52 converts the supplied packet (asynchronous broadcast packet or isochronous packet) by a predetermined parameter to create a bridge protocol frame in Step S144.

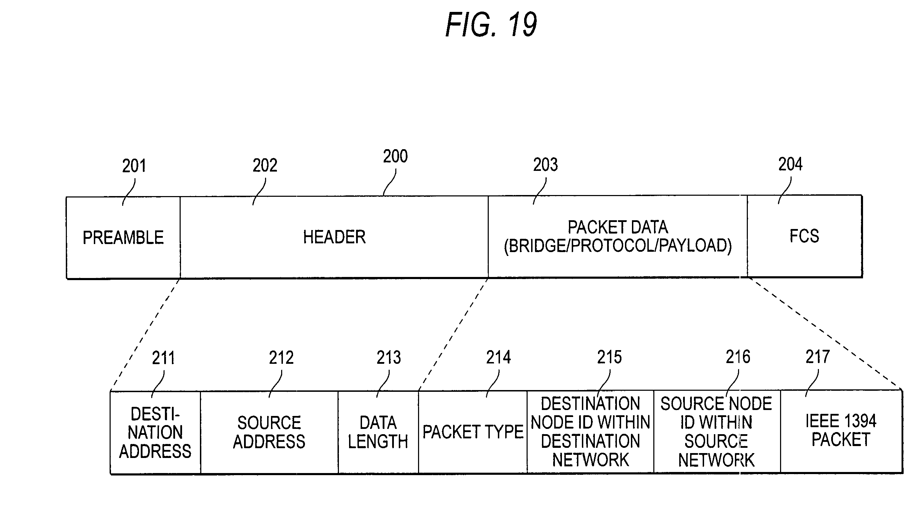

Fig. 19 is a schematic view showing the constitutional example of the bridge protocol frame.

In Fig. 19, the bridge protocol frame 200 is a packet of the Ethernet frame to be transmitted and received over the Ethernet network 1, and it includes preamble 201, header 202, packet data 203, and FCS (Frame Check Sequence) 204.

The preamble 201 is a field of 8 bytes for storing a signal for synchronizing the devices. The header 202 is a header as the Ethernet frame, which stores the information necessary for transmission and reception of the packet, although the details will be described. The packet data 203 is the data carried by this packet, and in the case of Fig. 19, since it is of the bridge protocol frame, the packet data 203 becomes the bridge protocol payload. The detail of the packet data 203 will be described later. The FCS 204 is a filed of 32 bits for storing the code (CRC code) of the CRC (Cyclic Redundancy Check) that is the error detection method capable of detecting the errors occurring continuously (burst error).

The header 202 includes the fields of destination address 211, source address 212, and data length 213.

The destination address 211 is a field of 6 bytes, where the MAC address of the bridge that is the destination of this packet is stored. The source address 212 is a field of 6 bytes, where the MAC address of the bridge that is the source of this packet is stored. The MAC address corresponds to the bridge ID 101B of the address conversion table 101 (identical to or having a predetermined correspondence). The data length 213 stores the length (payload length) of the payload (data portion) of this Ethernet frame (bridge protocol frame 200), in other words, the information about the size of the data of the packet data 203 (bridge protocol payload).

The packet data 203 includes the fields of packet type 214, destination node ID within destination network (DST_Node (Destination Node) ID) 215, source node ID within source network (SRC_Node (Source Node) ID) 216, and the IEEE 1394 packet 217.

The packet type 214 is a field of 2 bytes, where the information indicating the type of the IEEE 1394 packet 217 is stored. For example, when the IEEE 1394 packet 217 is the asynchronous request packet, the value "0x0010" is stored in the packet type 214; when the IEEE 1394 packet 217 is the asynchronous response packet, the value "0x0011" is stored in the packet type 214; when the IEEE 1394 packet 217 is the asynchronous broadcast packet, the value "0x0012" is stored in the packet type 214; and when the IEEE 1394 packet 217 is the isochronous packet, the value "0x0013" is stored in the packet type 214.

The DST_Node ID 215 is a field of 1 byte, where the destination node ID within the destination network of the node that becomes the destination of the IEEE 1394 packet (transferred IEEE 1394 packet) stored within the IEEE 1394 packet 217, specifically, the value of the bridge local node ID 101D in the address conversion table 101 (Fig. 5), corresponding to the destination node, is stored. For example, when the IEEE 1394 packet stored in the IEEE 1394 packet 217 (transferred IEEE 1394 packet) is the asynchronous broadcast packet or the isochronous packet, since there is no information of destination node, the value "0xFF" is stored.

The SRC_Node ID 216 is a field of 1 byte, where the source node ID within the source network of the node that becomes the source of the IEEE 1394 packet stored into the IEEE 1394 packet 217 (transferred IEEE 1394 packet), specifically, the value of the bridge local node ID 101D within the address conversion table 101 (Fig. 5), corresponding to the source node, is stored.

The IEEE 1394 packet 217 is a field for storing the transferred IEEE 1394 packet. Here, the transferred IEEE 1394 packet is stored with the same packet format as it is. The IEEE 1394 packet 217 may store a plurality of IEEE 1394 packets.

Returning to Fig. 17, the bridge controller 52 creates the bridge protocol frame by a predetermined parameter in Step S144 and stores the supplied asynchronous broadcast packet or the isochronous packet into this packet (bridge protocol frame 200). Namely, in this case, the bridge controller 52 stores the broadcast address "0xFFFFFFFF" in the destination address 211 of the bridge protocol frame 200, stores the value "0x0012" or the value "0x0013" in the packet type 214, and stores the value "0xFF" in the DST_Node ID 215, as mentioned above. At this time, the bridge controller 52 properly stores the necessary value in the other field. For example, the bridge controller 52 stores the value (for example, "0x01") of the source node ID in the SRC_Node ID 216.

Proceeding to the processing of Step S145, the bridge controller 52 transmits the bridge protocol frame 200 created in Step S144 to the Ethernet network 1 that is the global network.

After transmitting the bridge protocol frame 200, the bridge controller 52 proceeds to the processing of Step S146, where it judges whether to finish the bridge protocol frame transmission processing or not. When it judges that the bridge protocol frame transmission processing is not finished (for example, when it keeps monitoring the generation of a packet since the packets are continuously generated within the IEEE 1394 network 2 that is the local network and there is a possibility of capturing a new packet), the bridge controller 52 returns the processing to Step S141 and repeats the processing thereafter. When it judges that the bridge protocol frame transmission processing is finished, in Step S146 (for example, when no generation of a packet is expected since all the nodes within the IEEE 1394 network 2 that is the local network are in a resting state or a halt state), the bridge controller 52 proceeds to the processing in Step S147, where it performs the finishing processing such as halting its controlling processing unit and finishes the bridge protocol frame transmission processing.

When the captured packet is neither the asynchronous broadcast packet nor the isochronous packet, in Step S143, the IEEE 1394 Link 54 controlled by the bridge controller 52 proceeds to the processing of Step S151 of Fig. 18.

In Step S151 of Fig. 18, the bridge controller 52 refers to the destination address (destination node ID) of the supplied IEEE 1394 packet, further gains access to the address conversion table holding unit 59, and searches for the line (node) corresponding to the destination address (destination node ID) of the obtained IEEE 1394 packet from the address conversion table 101, referring to the address conversion table 101 held by the address conversion table holding unit 59. Namely, the bridge controller 52 searches for the destination node of the supplied IEEE 1394 packet according to the address conversion table, in Step S154.

The bridge controller 52 judges whether the value of the item of the local flag 101C is "0" or not, in the line corresponding to the destination address of the IEEE 1394 packet, according to the search result, in Step S155.

When it judges that the value of the local flag 101C is "0", the bridge controller 52 proceeds to the processing of Step S153, where it controls the IEEE 1394 Link 54 so as to judge whether or not the captured packet is the asynchronous response packet that is the packet to be transmitted to the request source from the node on the side of receiving the request as a response to the request, in the communication of the asynchronous method between the specified nodes. Namely, the IEEE 1394 Link 54 is controlled by the bridge controller 52, so as to judge whether or not the captured packet is the asynchronous response packet. When it judges that the capture packet is the asynchronous response packet, the IEEE 1394 Link 54 controlled by the bridge controller 52 proceeds to the processing of Step S154, where it supplies the Ack_complete packet to the source node in order to complete the transmission processing by the source node of the asynchronous response packet, as the processing within the IEEE 1394 network 2. When supplying the Ack_complete packet to the source node, the IEEE 1394 Link 54 controlled by the bridge controller 52 proceeds to the processing of Step S156.

When it judges that the captured packet is not the asynchronous response packet but the asynchronous request packet that is a packet which the node on the requesting side transmits to the node on the requested side as a request, the IEEE 1394 Link 54 controlled by the bridge controller 52 proceeds to the processing of Step S155, where it supplies the Ack_pending packet to the source node in order to complete the transmission processing by the source node of the asynchronous request packet, as the processing within the IEEE 1394 network 2. When supplying the Ack_pending packet to the source node, the IEEE 1394 Link 54 controlled by the bridge controller 52 proceeds to the processing of Step S156.

The bridge controller 52 creates the bridge protocol frame by a predetermined parameter in Step S156, and transmits the created bridge protocol frame to the Ethernet network 1 that is the global network, in Step S157.

For example, the bridge controller 52 stores the MAC address of the bridge (destination bridge) whose local network is the destination network including the destination node in the destination address 211, stores the MAC address (namely, the MAC address of the self-bridge) of the bridge (source bridge) whose local network is the source network including the source node in the source address 212, stores the value "0x0010" in the packet type 214 in the case of the asynchronous request packet, stores the value "0x0011" in the packet type 214 in the case of the asynchronous response packet, stores the destination node ID within the destination network of the destination node (the bridge local node ID of the destination node) in the DST_Node ID 215, stores the source node ID within the source network of the source node (bridge local node ID of the source node) in the SRC_Node ID 216, creates the bridge protocol frame 200 to store the transferred IEEE 1394 packet, and transmits the created bridge protocol frame 200 to the Ethernet network 1 through the Ethernet interface 51 in Step S157.

After transmitting the bridge protocol frame 200, the bridge controller 52 proceeds to the processing of Step S146 of Fig. 17. In Step S152, when it judges the value of the local flag to be "1", namely, when it judges the destination of the IEEE 1394 packet to be the node within the IEEE 1394 network 2 that is the local area network (the IEEE 1394 node 31 to the IEEE 1394 node 33), the bridge controller 52 omits the processing of Step S153 to Step S157 and returns the processing to Step S146 of Fig. 17 and repeats the processing thereafter. In this case, the IEEE 1394 Link 54 performs the packet transmission and reception processing within the ordinal IEEE 1394 network 4 and supplies the IEEE 1394 packet to the destination node.

Through the relay processing of the packet as mentioned above, the bridge controller can properly transmit the IEEE 1394 packet, whatever packet it may be, generated in the node within the local network, to the Ethernet network 1 that is the global network, as the Ethernet frame (bridge protocol frame 200).

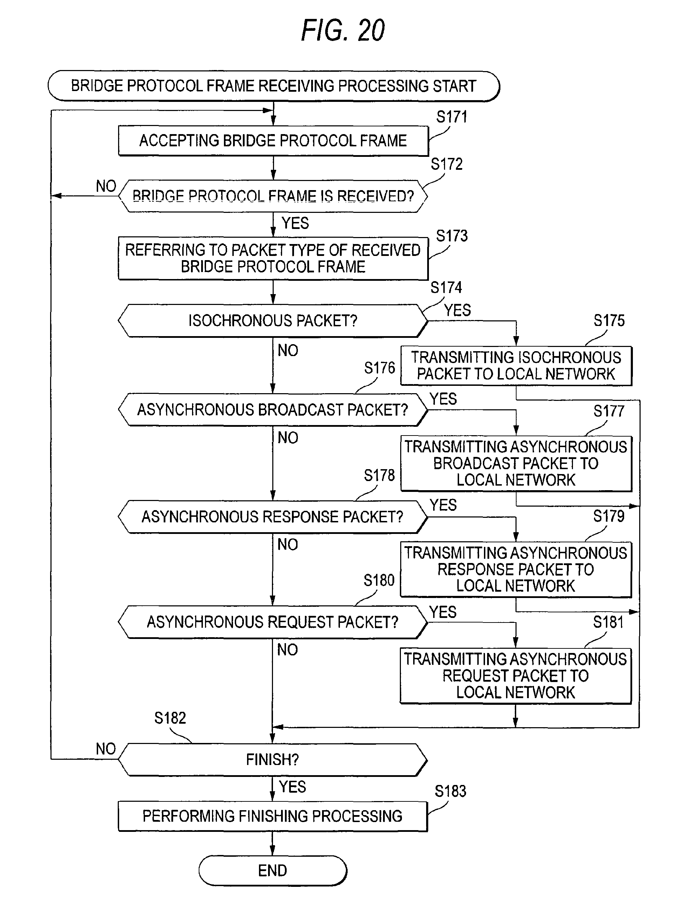

Next, the bridge protocol frame receiving processing for receiving the bridge protocol frame 200 transmitted to the Ethernet network 1 as mentioned above will be described with reference to the flow chart of Fig. 20.

At first, in Step S171, the bridge controller 52 controls the Ethernet interface 51, so as to receive the bridge protocol frame 200. In Step S172, the bridge controller 52 judges whether or not its controlling Ether interface 51 has received the bridge protocol frame 200, and when it judges that it has received, the bridge controller obtains the bridge protocol frame 200 and proceeds to the processing of Step S173.

The bridge controller 52 refers to the packet type 214 of the received bridge protocol frame 200 in Step S173. In Step S174, the bridge controller 52 judges whether or not the IEEE 1394 packet stored into the IEEE 1394 packet 217 of the received bridge protocol frame 200 (transferred IEEE 1394 packet) is the isochronous packet according to the value of the packet type 214.

When the value of the packet type 214 of the received bridge protocol frame 200 is "0x0013" and it is judged to be the isochronous packet, the bridge controller 52 proceeds to the processing of Step S175, where it performs the processing of transmitting the isochronous packet to the IEEE 1394 network 2 that is the local network.

More specifically, the bridge controller 52 gains access to the address conversion table holding unit 59 (Fig. 3), so as to search for the line where the value of the bridge ID 101B is equal to the MAC address stored in the source address 212 of the received bridge protocol frame 200 and the value of the bridge local node ID 101D is equal to the source node ID within the source network stored in the SRC_Node ID 216, with reference to the held address conversion table 101 (Fig. 5), and sets again the CIP (Common Isochronous Protocol) header SID (Source ID) field of the data included in the IEEE 1394 packet, by using the value of the node ID 101A of the line thus searched. The bridge controller 52 supplies the set IEEE 1394 packet to the IEEE 1394 Link 54 and further supplies it to the IEEE 1394 network 2 that is the local network as the isochronous packet. Upon completion of the processing of Step S175, the bridge controller 52 proceeds to the processing of Step S182.

When it judges that the value of the packet type 214 of the received bridge protocol frame 200 is not "0x0013" and that it is not the isochronous packet, in Step S174, the bridge controller 52 proceeds to the processing of Step S176, where it judges whether or not the IEEE 1394 packet stored in the IEEE 1394 packet 217 of the received bridge protocol frame 200 (transferred IEEE 1394 packet) is the asynchronous broadcast packet.

When it judges that the value of the packet type 214 of the received bridge protocol frame 200 is "0x0012" and that it is the asynchronous broadcast packet, the bridge controller 52 proceeds to the processing of Step S177, where it performs the processing of transmitting the asynchronous broadcast packet to the IEEE 1394 network 2 that is the local network.

Specifically, the bridge controller 52 gains access to the address conversion table holding unit 59 (Fig. 3), so as to search for the line where the value of the bridge ID 101B is equal to the MAC address stored in the source address 212 of the received bridge protocol frame 200 and the value of the bridge local node ID 101D is equal to the source node ID within the source network stored in the SRC_Node ID 216, with reference to the held address conversion table 101 (Fig. 5), and sets the Source_ID field of the IEEE 1394 packet header again, by using the value of the node ID 101A of the line thus searched. The bridge controller 52 sets again the value "0xFFFF" in the destination_ID field included in the IEEE 1394 packet header. The bridge controller 52 supplies the set IEEE 1394 packet to the IEEE 1394 Link 54 and further supplies it to the IEEE 1394 network 2 that is the local network, as the asynchronous broadcast packet. Upon completion of the processing of Step S177, the bridge controller 52 proceeds to the processing of Step S182.

When it judges that the value of the packet type 214 of the received bridge protocol frame 200 is not "0x0012" and that it is not the asynchronous broadcast packet, in Step S176, the bridge controller 52 proceeds to the processing of Step S178, where it judges whether or not the IEEE 1394 packet stored in the IEEE 1394 packet 217 of the received bridge protocol frame 200 (transferred IEEE 1394 packet) is the asynchronous response packet.

When it judges that the value of the packet type 214 of the received bridge protocol frame 200 is "0x0011" and that it is the asynchronous broadcast packet, the bridge controller 52 proceeds to the processing of Step S179, where it performs the processing of transmitting the asynchronous response packet to the IEEE 1394 network 2 that is the local network.

Specifically, the bridge controller 52 gains access to the address conversion table holding unit 59 (Fig. 3), so as to search for the line where the value of the bridge ID 101B is equal to the MAC address stored in the source address 212 of the received bridge protocol frame 200 and the value of the bridge local node ID 101D is equal to the source node ID within the source network stored in the SRC_Node ID 216, with reference to the held address conversion table 101 (Fig. 5), and sets the Sourece_ID field of the IEEE 1394 packet header again, by using the value of the node ID 101A of the line thus searched.

Further, the bridge controller 52 searches for the line where the value of the bridge ID 101B is equal to the MAC address stored in the source address 211 of the received bridge protocol frame 200 and the value of the bridge local node ID 101D is equal to the destination node ID within the destination network stored in the DST_Node ID 215, with reference to the address conversion table 101, and sets the destination_ID field of the IEEE 1394 packet header again, by using the value of the node ID 101A of the line thus searched.

The bridge controller 52 supplies the set IEEE 1394 packet to the IEEE 1394 Link 54 and further supplies it to the IEEE 1394 network 2 that is the local network as the asynchronous response packet. Upon completion of the processing of Step S179, the bridge controller 52 proceeds to the processing of Step S182.

When it judges that the value of the packet type 214 of the received bridge protocol frame 200 is not "0x0011" and that it is not the asynchronous response packet, in Step S178, the bridge controller 52 proceeds to the processing of Step S180, where it judges whether or not the IEEE 1394 packet stored in the IEEE 1394 packet 217 of the received bridge protocol frame 200 (transferred IEEE 1394 packet) is the asynchronous request packet.

When it judges that the value of the packet type 214 of the received bridge protocol frame 200 is "0x0010" and that it is the asynchronous request packet, the bridge controller 52 proceeds to the processing of Step S181, where it performs the processing of transmitting the asynchronous request packet to the IEEE 1394 network 2 that is the local network.

Specifically, the bridge controller 52 sets again the Source_ID field and the destination_ID field of the IEEE 1394 packet header through the same processing as in the case of the asynchronous response packet, supplies the set IEEE 1394 packet to the IEEE 1394 Link 54, and further supplies it to the IEEE 1394 network 2 that is the local network, as the asynchronous request packet. Upon completion of the processing of Step S181, the bridge controller 52 proceeds to the processing of Step S182.

When it judges that the value of the packet type 214 of the received bridge protocol frame 200 is not "0x0010" and that it is not the asynchronous request packet, the bridge controller 52 proceeds to the processing of Step S182 without performing the transmission processing since the packet type of this IEEE 1394 packet is not clear.

The bridge controller 52 judges whether or not to finish the bridge protocol frame processing in Step S182. When it judges that the bridge protocol frame processing is not finished, the bridge controller 52 returns the processing to Step S171 and repeats the processing thereafter.

When it judges that the bridge protocol frame processing is finished in Step S182, the bridge controller 52 performs the finishing processing such as breaking off the power of its controlling processing unit, hence to finish the bridge protocol frame receiving processing, in Step S183.

By performing the bridge protocol frame receiving processing as mentioned above, the bridge controller 52 can obtain the Ethernet frame supplied from the other bridge through the Ethernet network 1, and whatever type of packet the IEEE 1394 packet stored in the Ethernet frame may be, the IEEE 1394 packet can be transmitted to the IEEE 1394 network 2 that is the local network in a suitable way.

Although the detailed description is omitted because of overlap of the contents, each of the bridge 12 and the bridge 13 performs the above-mentioned bridge protocol frame transmission processing and bridge protocol frame receiving processing, similarly to the bridge 11. Each bridge, however, performs the bridge protocol frame transmission processing and bridge protocol frame receiving processing as the relay processing between the Ethernet network 1 and the respective local IEEE 1394 networks. Accordingly, for example, the portion described as the IEEE 1394 network 2 in the above explanation is properly replaced with the corresponding local network of each bridge. The other components are the same and the proper structure is applied according to the proper correspondence.

Accordingly, the bridge 11 can transmit and receive the IEEE 1394 packet through the Ethernet network 1 to and from the other bridge as well as perform the relay processing of the IEEE 1394 packet properly depending on the packet type, by performing the bridge protocol frame transmission processing and the bridge protocol frame receiving processing.

According to this, even when they are the nodes of the different IEEE 1394 networks actually, when they are formed as the nodes of one IEEE 1394 virtual network, they can communicate with each other through transmission and reception of the IEEE 1394 packet in the conventional way. In other words, the IEEE node 1394 can communicate with another node within the IEEE 1394 network different from the IEEE 1394 network which the current node belongs to (when it is connected to the node through the IEEE 1394 virtual network), in the same way (in the existing IEEE 1394 protocol) as in the case of communicating with the other node of the IEEE 1394 network which the current node belongs to.

That is, even on the IEEE 1394 virtual network, since each node can make a communication in the existing protocol, the IEEE 1394 virtual network can be configured by (using) the possible device to be the existing IEEE 1394 node as the node. Therefore, the IEEE 1394 virtual network can be configured at ease and at low cost.

Since the bridge for configuring this IEEE 1394 virtual network controls the local IEEE 1394 network basically in the conventional way (since the communication is controlled by the protocol of the existing IEEE 1394 protocol), the IEEE 1394 PHY 55 can be formed by using the conventional one and therefore, it can be manufactured at ease and at low cost. The IEEE 1394 Link 54 performs the transmission and reception of the packet to and from the bridge controller 52 as well as the control processing within the ordinal IEEE 1394 network. In order to do the processing accompanying the above (for example, the processing of Step S153 to Step S157 in Fig. 18), the specification of this IEEE 1394 Link 54 should be the expanded one of the specification of the conventional IEEE 1394 Link which performs the processing within the IEEE 1394 network only. However, since it has only to do the processing, the specification change can be comparatively small.

This time, a specific example of transferring the IEEE 1394 packet between the nodes of the different IEEE 1394 networks, through mutual communication between the bridges, as mentioned above, will be described.

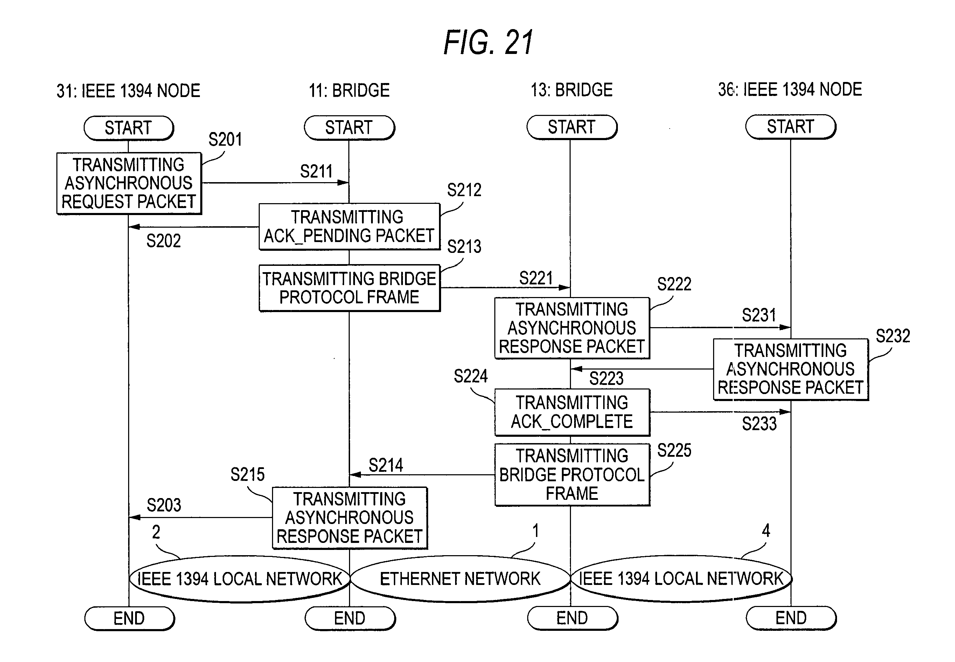

At first, an example of the asynchronous communication method will be described with reference to the flow chart of Fig. 21. As one example, the description will be made about the case where the IEEE 1394 node 31 of Fig. 1 transmits an asynchronous request packet to the IEEE 1394 node 36 and the IEEE 1394 node 36 transmits an asynchronous response packet to the IEEE 1394 node 31.

First, When the IEEE 1394 node 31 transmits the asynchronous request packet destined for the IEEE 1394 node 36 (actually the dummy node corresponding to the IEEE 1394 node) in Step S201, the packet is supplied to the bridge 11 having the dummy node of the destination. The bridge 11 performs the bridge protocol frame transmission processing (Fig. 17 and Fig. 18) and obtains the asynchronous request packet in Step S211 based on this processing.

Having got the asynchronous request packet, the bridge 11 transmits the Ack_pending packet to the IEEE 1394 node 31 that is the source of the asynchronous request packet in Step S212 because the obtained packet is the asynchronous request packet, as mentioned above. The IEEE 1394 node 31 receives the Ack_pending packet and completes the asynchronous request packet transmission processing in Step S202.

Having transmitted the Ack_pending packet, the bridge 11 creates the bridge protocol frame 200 for storing the asynchronous request packet and transmits it to the bridge 13 corresponding to the destination (IEEE 1394 node 36) of the asynchronous request packet through the Ethernet network 1 in Step S213. The bridge 13 performs the receiving processing of the bridge protocol frame (Fig. 20), receives the bridge protocol frame 200 according to the processing in Step S221, and transmits the asynchronous request packet stored in the received bridge protocol frame to the IEEE 1394 node 36 through the local IEEE 1394 network 4 in Step S222. The IEEE 1394 node 36 receives the asynchronous request packet in Step S231.

Upon receipt of the asynchronous request packet, the IEEE 1394 node 36 performs the processing in reply to the request and creates the asynchronous response packet destined for the IEEE 1394 31 as the reply for the asynchronous request packet and transmits it to the bridge 13 in Step S232.

The bridge 13 performs the bridge protocol frame transmission processing (Fig. 17 and Fig. 18), and when receiving the asynchronous response packet in Step S223, it transmits the Ack_complete packet to the IEEE 1394 node 36 that is the source of the asynchronous response packet in Step S224, because the received packet is the asynchronous response packet. The IEEE 1394 node 36 receives the Ack_complete packet in Step S233 and completes the asynchronous response packet transmission processing.

The bridge 13, having transmitted the Ack_complete packet, creates the bridge protocol frame 200 for storing the asynchronous response packet and transmits it to the bridge 11 corresponding to the destination (IEEE 1394 node 31) of the asynchronous response packet through the Ethernet network 1 in Step S225. The bridge 11 receives the bridge protocol frame 200 in Step S214 through the bridge protocol frame receiving processing (Fig. 20) and transmits the asynchronous response packet stored in the received bridge protocol frame to the IEEE 1394 node 31 through the local IEEE 1394 network 2 in Step S215. The IEEE 1394 node 31 receives the asynchronous response packet in Step S203.

As mentioned above, through configuration of the IEEE 1394 virtual network, even when they are the nodes of the different IEEE 1394 networks, included in the IEEE 1394 virtual network, these nodes can communication with each other easily in the asynchronous method, similarly to the case of the communication between the nodes belonging to one IEEE 1394 network.

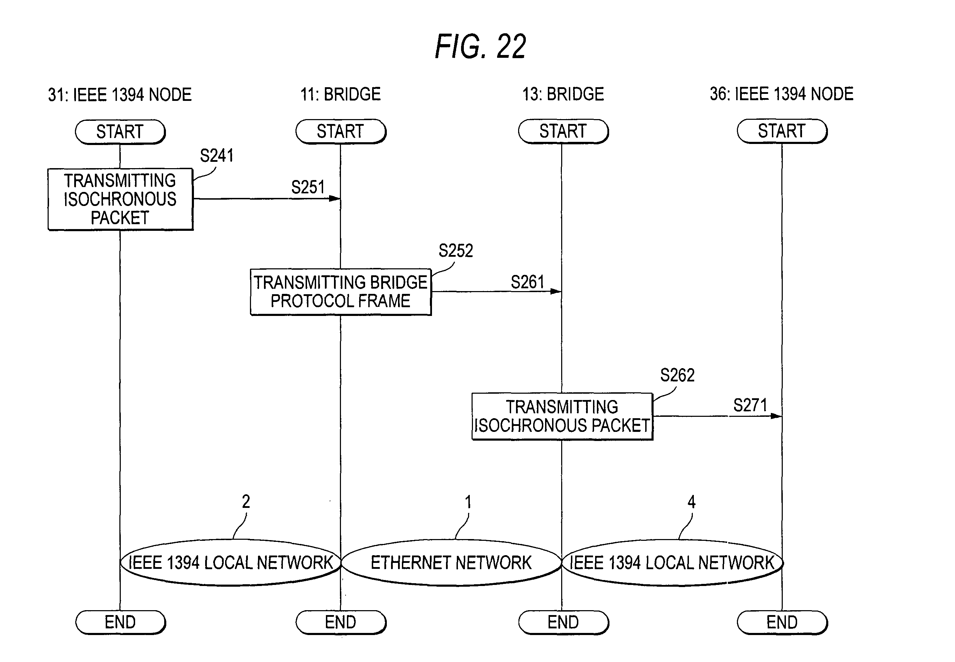

This time, an example of the isochronous communication method will be described with reference to the flow chart of Fig. 22. The description will be made, for example, in the case where the IEEE 1394 node 31 of Fig. 1 transmits an isochronous packet to the IEEE 1394 node 36.

At first, in Step S241, the IEEE 1394 node 31 transmits an isochronous packet.

In the case of the isochronous communication method, a packet is transmitted through a virtual transmission path, called channel. Namely, in the case of the isochronous communication method, since the communication is not performed by the unit of node but a packet is transferred by the unit of channel, management of nodes is performed separately from the packet. Accordingly, the information about the destination node and the source node is not included in the isochronous packet and actually it is not clear. Namely, the IEEE 1394 node 31 broadcasts the isochronous packet.

The bridge 11 performs the bridge protocol frame transmission processing (Fig. 17 and Fig. 18), and when receiving the isochronous packet supplied to the bridge 11, of the broadcasted isochronous packets, the bridge 11 creates the bridge protocol frame 200 for storing the isochronous packet by using a predetermined parameter in Step S251, and transmits the bridge protocol frame 200 to the Ethernet network 1 in Step S252. At this time, the destination address of the bridge protocol frame 200 is unspecified and set at, what is called, broadcast address, and the bridge protocol frame 200 is broadcasted to the Ethernet network 1.

The bridge 13 performs the bridge protocol frame receiving processing (Fig. 20), and obtains the broadcasted bridge protocol frame 200 in Step S261, and transmits the isochronous packet included in the frame to the local IEEE 1394 network 4 in Step S262.

The isochronous packet is processed in the IEEE 1394 network 4 in the same way as in the case of the isochronous transfer in the conventional IEEE 1394 network and the IEEE 1394 node 36 receives the isochronous packet in Step S271.

As mentioned above, through configuration of the IEEE 1394 virtual network, even when they are the nodes of the different IEEE 1394 networks, included in the IEEE 1394 virtual network, these nodes can make an isochronous communication easily, similarly to the case of the communication between the nodes belonging to one IEEE 1394 network.

As mentioned above, as illustrated in Fig. 6, by using and initializing the IEEE 1394 PHY as the dummy node in the bridge, hence to configure the IEEE 1394 virtual network, the bridge controller 52 can configure the IEEE 1394 virtual network at ease and at low cost. In thus configured IEEE 1394 virtual network, the nodes can communicate with each other similarly in the case of the actual IEEE 1394 network.

In the above description, the bridge prepares the IEEE 1394 PHY physically and the bus reset processing is performed with the same as the dummy node, hence to configure the IEEE 1394 virtual network. In this case, the maximum number of the dummy nodes that the bridge can set is restricted depending on the physical number of the IEEE 1394 PHYs. For example, in the case of the bridge of Fig. 1, five IEEE 1394 PHYs from the IEEE 1394 PHY 122 to the IEEE 1394 PHY 126, as illustrated in Fig. 6, are prepared for the dummy nodes. Accordingly, the maximum number of the nodes within the configurable IEEE 1394 virtual network by this bridge (bridge 12 or bridge 13) becomes the sum of the number of the dummy nodes, the IEEE 1394 PHY 121 for data transmission and reception, and the number of the nodes within the IEEE 1394 network 2 (the IEEE 1394 PHY 121 can be used as the dummy node).

Accordingly, the bridge 11 has a restriction in the number of the node within the configurable IEEE 1394 virtual network. In order to loosen this restriction, a large number of the IEEE 1394 PHYs for dummy nodes have to be prepared previously, but the manufacturing cost of the bridge 11 increases according to an increase in the number of the IEEE 1394 PHYs for dummy nodes. According to the node number of the configured IEEE 1394 virtual network, there may occur an unnecessary IEEE 1394 PHY (set inactive at the initialization). This case causes an unnecessary increase in the manufacturing cost of the bridge 11.

For example, in the initialization processing, one dummy node may be used repeatedly as a plurality of virtual dummy nodes.

Fig. 23 is a block diagram showing the other constitutional example of the bridge 11 to which the invention is applied. In Fig. 23, the same reference numerals are attached to the same components as in Fig. 3, and their description is omitted.

Differently from the case of Fig. 3, the IEEE 1394 PHY 221 is not formed by several IEEE 1394 PHYs for dummy nodes physically, but it is one IEEE 1394 PHY physically, which is controlled by the initialization controller 222, to change the setting of the node ID, thereby performing the initialization processing of the IEEE 1394 network 2 as several virtual nodes. The initialization controller 222 is controlled by the bridge controller 52 through the bus 231A, so as to control the IEEE 1394 PHY 221 through the bus 231B to control the initialization processing of the IEEE 1394 network 2.

The bridge controller 52 performs the bridge initialization processing as shown in the flow charts of Fig. 7, Fig. 11, and Fig. 12, depending on each situation as mentioned above, hence to configure the IEEE 1394 virtual network. The bridge controller 52, however, performs the dummy node setting processing to be done in Step S7 of Fig. 7, according to the flow chart shown in Fig. 24, for example when performing the bridge initialization processing in Fig. 7, in configuration of the IEEE 1394 virtual network. The other example of the dummy node setting processing will be described with reference to the flow chart of Fig. 24.

The bridge controller 52, having started the dummy node setting processing, controls the bridge database 58 at first in Step S291 and updates the bridge database 81 held by the bridge database 58 (Fig. 4) into the latest state. In Step S292, the bridge controller 52 obtains the updated bridge database 81, calculates the number of the nodes that is set as the nodes of the IEEE 1394 virtual network, based on the information, and sets the virtual dummy nodes for the necessary number. For example, in the case of the system of Fig. 1, the bridge controller 52 of the bridge 11 sets three virtual dummy nodes as the dummy nodes corresponding to the IEEE 1394 node 34 to the IEEE 1394 node 36, according to the information of the bridge database 81.

Having set the virtual dummy nodes, the bridge controller 52 supplies the information of the virtual dummy nodes to the initialization controller 222 in Step S293. After supplying the information of the virtual dummy nodes, the bridge controller 52 finishes the dummy node setting processing, returns the processing to Step S7 of Fig. 7 in this case, and repeats the processing thereafter from the point of finishing the processing of Step S7.

The bridge controller 52 makes the initialization controller 222 perform the bus reset processing in Step S9 in Fig. 7. The initialization controller 222 makes the IEEE 1394 PHY 221 perform the bus reset processing through performing the bus reset controlling processing.

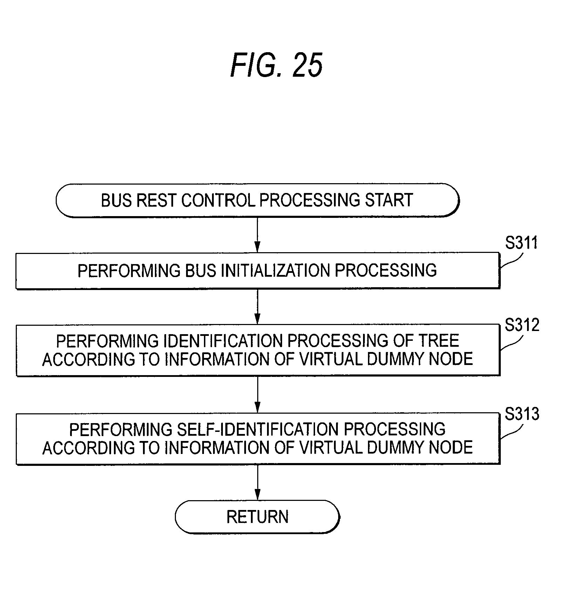

This bus reset controlling processing will be described with reference to the flow chart of Fig. 25.

Upon starting the bus reset processing, the initialization controller 222 makes the IEEE 1394 PHY 221 perform the bus initialization processing to reset the IEEE 1394 network in Step S311. The initialization controller 222 proceeds to the processing of Step S312, where it makes each node of the IEEE 1394 network 2 perform the identification processing of tree, according to the information of the virtual dummy nodes supplied from the bridge controller 52. The IEEE 1394 PHY 221 performs the identification processing of tree while changing the setting into that for the (virtual) nodes depending on the contents of the processing, according to the information of the virtual dummy nodes. Namely, the IEEE 1394 PHY 221 performs the identification processing of tree, pretending to be each of the virtual dummy nodes when a plurality of virtual dummy nodes are set.

Upon completion of the identification processing of tree, the initialization controller 222 proceeds to the processing of Step S313, where it makes each node of the IEEE 1394 network 2 perform the self-identification processing according to the information of the virtual dummy nodes supplied from the bridge controller 52. The IEEE 1394 PHY 221 performs the self-identification processing while changing the setting into that for the (virtual) nodes depending on the contents of the processing, according to the information of the virtual dummy nodes. Namely, the IEEE 1394 PHY 221 performs the self-identification processing, pretending to be each of the virtual dummy nodes when a plurality of virtual dummy nodes are set.

Upon completion of the self identification processing, the initialization controller 222 finishes the bus reset controlling processing, and returns the processing to Step S9 in Fig. 7, where it makes the bridge controller 52 perform the processing thereafter.

In these ways, the initialization controller 222 controls the IEEE 1394 PHY 221 so as to perform the bus initialization processing while changing the setting information as the dummy node, for example, node ID. Thus, the bridge controller 52 can configure the IEEE 1394 virtual network of the node number more than the restriction corresponding to the number of the IEEE 1394 PHYs for dummy nodes provided as the IEEE 1394 PHY 55.

Although the above description has been made in the case where the bridge controller 52 performs the bridge initialization processing described with reference to the flow chart of Fig. 7, it may be in the other case, and for example, in the case of performing the bridge initialization processing of Fig. 11, or in the case of performing the bridge initialization processing of Fig. 12, it may be the same.

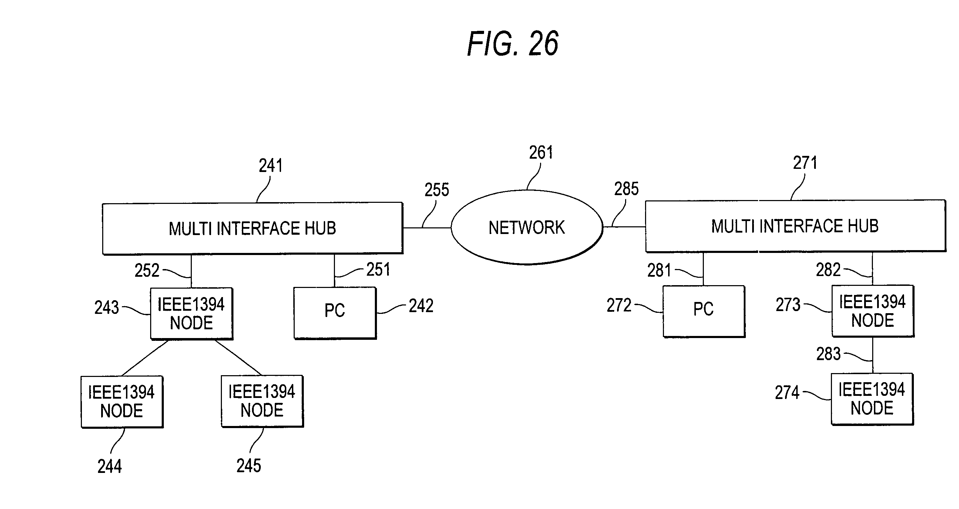

Although the above description has been made in the case of configuring the IEEE 1394 virtual network through the mutual communication between a plurality of bridges performing the relay processing between the Ethernet network and the IEEE 1394, it is not restricted to this, but for example, as illustrated in Fig. 26, the IEEE 1394 virtual network may be configured through the mutual communication of a plurality of multi-interface hub (HUB) capable of connecting several kinds of buses.

In Fig. 26, the multi-interface hub 241 is a hub capable of connecting the Ethernet cable (bus) to the IEEE 1394 cable (bus), and it is connected to the PC 242 through the Ethernet cable 251 and to the IEEE 1394 node 243 through the IEEE 1394 cable 252. The multi-interface hub 241 is also connected to the network 261 represented by the Internet through the Ethernet cable 255. The IEEE 1394 node 244 is connected to the IEEE 1394 node 243 through the IEEE 1394 cable 253 and further the IEEE 1394 node 245 is connected there through the IEEE 1394 cable 254.

The multi-interface hub 271 is also connected to the network 261 through the Ethernet cable 285. The multi-interface hub 271 is connected to the PC 272 through the Ethernet cable 281 and to the IEEE 1394 node 273 through the IEEE 1394 cable 282. The IEEE 1394 node 273 is connected to the IEEE 1394 node 274 through the IEEE 1394 cable 283.

Even in the network of the above structure, the multi-interface hub 241 regards the IEEE 1394 network including the IEEE 1394 node 243 to the IEEE 1394 node 245 as its local network and the multi-interface hub 271 regards the IEEE 1394 network including the IEEE 1394 node 273 and the IEEE 1394 node 274 as its local network, and each of the multi-interface hub 241 and the multi-interface hub 271 performs the same processing as the above-mentioned bridge 11, hence to configure the IEEE 1394 virtual network with the IEEE 1394 nodes 243 to 245 and the IEEE 1394 node 273 and the IEEE 1394 node 274 as its nodes through the mutual communication.

Although the above description has been made in the case of using the Ethernet network as the global network, any network of whatever standard will do as the global network.

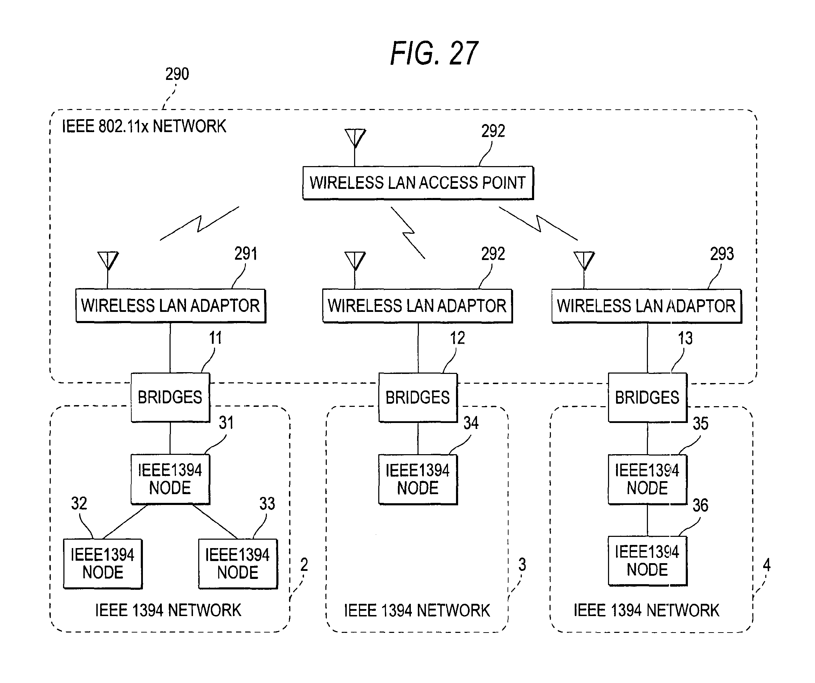

Fig. 27 is a view showing the other constitutional example of the network system to which the invention is applied. The same reference numerals are attached to the same components as in the network system of Fig. 1.

In Fig. 27, the bridge 11 to the bridge 13 are respectively connected to the wireless LAN (Local Area Network) adaptor 291 to the wireless LAN adaptor 293 on the side of the port of the global network.

The wireless LAN adaptor 291 to the wireless LAN adaptor 293 perform a predetermined wireless communication with the wireless LAN access port 294 to configure the IEEE 802.11x network 290 that is the network based on the standard of IEEE 802.11x (IEEE 802.11a, IEEE 802.11b, IEEE 802.11g, or the like). Namely, the wireless LAN adaptor 291 to the wireless LAN adaptor 293 can communicate with each other through the wireless communication via the wireless LAN access point 294. Accordingly, the bridge 11 to the bridge 13 can communicate with each other similarly to the network system of Fig. 1, and they can configure the IEEE 1394 virtual network. The network system shown in Fig. 27 can configure the IEEE 1394 virtual network with the IEEE 802.11x as the global network.

Each of the bridges forming the IEEE 1394 virtual network as mentioned above mutually confirms its presence in the global network and when there occurs a change, for example, when one of the bridges breaks down the power and gets into an uncommunicable state, the IEEE 1394 virtual network may be configured again.

In this case, each of the bridges performs the bridge confirmation processing and the bridge confirmation response processing, mutually transmits and receives the Ping frame that is the presence confirmation packet and the echo frame that is the response packet to be transmitted when receiving the Ping frame, through the global network, and confirms the mutual presence.

The bridge confirmation processing to be performed by a bridge in order to confirm the presence of the other bridge will be described with reference to the flow chart of Fig. 28.

Upon starting the bridge confirmation processing, the bridge controller 52 of the bridge 11 gains access to the bridge database holding unit 58 (Fig. 3) in Step S331 and refers to the held bridge database 81 (Fig. 4). The bridge controller 52 transmits the Ping frame to the other bridge based on each record of the referred bridge database 81, in Step S332.

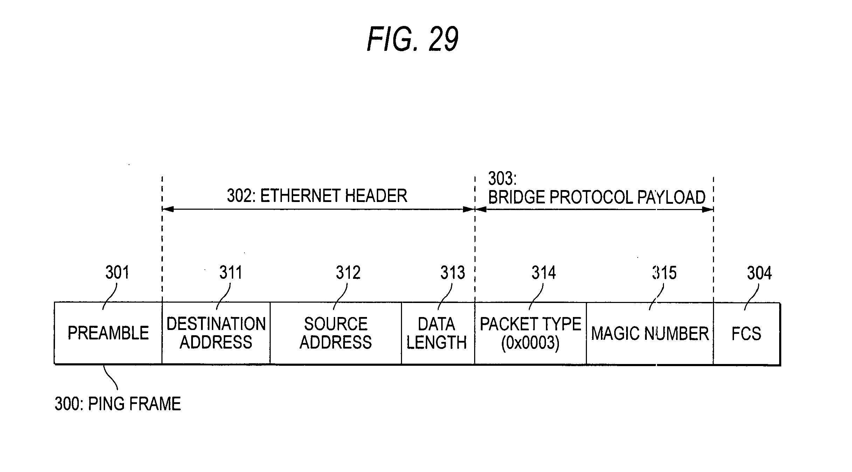

Fig. 29 is a schematic view showing the constitutional example of the Ping frame. The Ping frame 300 is the Ethernet frame to be transmitted and received in the Ethernet network 1. The Ping frame 300 includes preamble 301, Ethernet header 302, bridge protocol payload 303, and FCS 304. The preamble 301 and the FCS 304 are respectively the same as the preamble 141 and the FCS 144 of Fig. 8, and their description is omitted.

The Ethernet header 302 includes destination address 311, source address 312, and data length 313. Since its structure is the same as that of the header 142 of Fig. 8, the detailed description is omitted. In this case, the destination address 311 includes the address of the other bridge registered into the bridge database 81.

The bridge protocol payload 303 that is the data portion of the Ping frame 300 has the structure based on the protocol between the bridges and it includes packet type 314 and magic number 315.

The packet type 314 is a filed of 2 bytes for storing the information indicating the type of this packet and in the case of the Ping frame 300, the value "0x0003" is stored there. The magic number 315 is a field of 2 bytes, where the random number set at the transmission time of the Ping frame is stored.

Returning to Fig. 28, as mentioned above, the bridge controller 52 creates the Ping frame 300, as illustrated in Fig. 29, and transmits it to the other bridge registered in the bridge database 81, through controlling the Ethernet interface 51. At that time, the bridge controller 52 selects each of the other bridges that can be the transmitting parties sequentially in the order of registration (for example, in the decreasing order or increasing order) in the bridge database 81 and transmits the Ping frame to each of the other bridges.

In Step S333, the bridge controller 52 controls the Ethernet interface 51 so as to judge whether the Ethernet interface 51 has obtained the echo frame or not. This judgment may be performed after the bridge controller 52 waits for a predetermined time. When it judges that it has got the echo frame (the details will be described) transmitted from the other bridge as a reply to the Ping frame transmitted in Step S332, the bridge controller 52 finishes the confirmation processing as for the bridge and proceeds to the processing in Step S334, where it judges whether there is a bridge which has not been processed (a bridge to which it does not transmit the Ping) in the bridge database 81 in order to decide the next bridge (to which it transmits the Ping frame 300) that is subject to the confirmation processing. When it judges that there is a bridge not processed, the bridge controller 52 proceeds to the processing of Step S335, where it waits for a predetermined time, and when the predetermined time elapses, it returns the processing to Step S331, where it repeats the processing thereafter. Namely, when finishing the confirmation processing as for one of the other bridges, the bridge controller 52 starts the confirmation processing of the next other bridge after elapse of the predetermined time. After repetition of this processing, the bridge controller 52 performs the confirmation processing on all the other bridges registered into the bridge database 81.

In Step S334, when it judges that the confirmation processing has been finished on all the other bridges and that there is no unprocessed bridge, the bridge controller 52 proceeds to the processing of Step S336, where it judges whether the bridge confirmation processing is finished or not. When it is judged that the bridge confirmation processing is not finished, the bridge controller 52 proceeds to the processing of Step S337, where it performs the initialization processing, for example, it resets the value of the measurement time. Upon completion of the initialization processing, the bridge controller 52 returns the processing to Step S335, where it repeats the processing thereafter. As mentioned above, the bridge controller 52 could start the confirmation processing again from the first bridge even in the case of once finishing the confirmation processing on the bridges registered into the bridge database 81 and, as described later, it could start the confirmation processing newly from the first bridge of the bridge database 81 even when the bridge database 81 is updated.

In Step S333, when it judges that the bridge 11 has not received the echo frame corresponding to the Ping frame 300 which is transmitted, namely, when there is no reply from the other bridge, since the structure of the Ethernet network 1 changes, the bridge controller 52, judging that there is a possibility that the structure of the IEEE 1394 virtual network may change, proceeds to the processing of Step S338, where it performs the bridge initialization processing and configures the IEEE 1394 virtual network again. After the bridge initialization processing, the bridge controller 52 returns the processing to Step S336, where it repeats the processing thereafter.

When deciding to finish the bridge confirmation processing in Step S336, the bridge controller 52 proceeds to the processing of Step S339 and after performing the predetermined finishing processing, it finishes the bridge confirmation processing.

The description becomes overlap and it is omitted here, but the bridge 12 and the bridge 13 perform the bridge confirmation processing in the same way as the above-mentioned bridge 11.

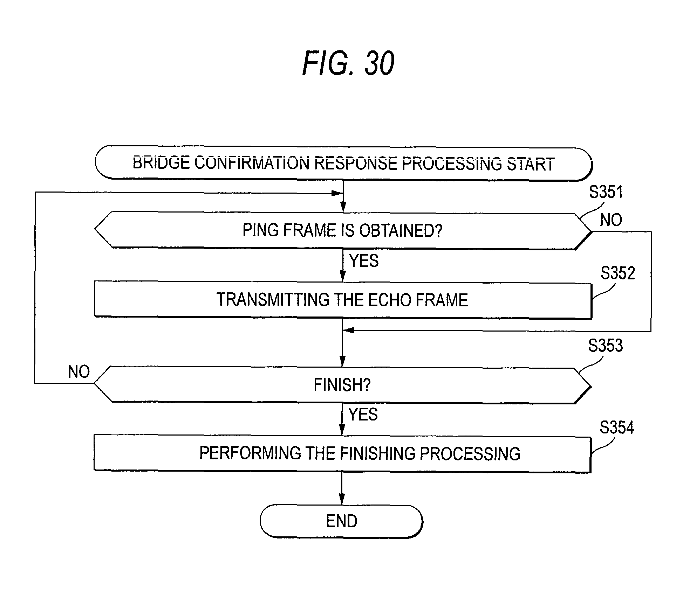

This time, the bridge confirmation response processing performed in parallel with the bridge confirmation processing in each bridge will be described in accordance with the bridge confirmation processing performed as mentioned above, referring to the flow chart of Fig. 30.

Upon starting the bridge confirmation processing, the bridge controller 52 of the bridge 11 first controls the Ethernet interface 51 to judge whether the Ethernet interface 51 has obtained the Ping frame 300 through the Ethernet network 1, in Step S351.

When it judges that it has obtained the Ping frame 300, the bridge controller 52 proceeds to the processing of Step S352, where it creates the echo frame corresponding to the Ping frame 300 and controls the Ethernet interface 51 to transmit the echo frame to the Ethernet network 1.

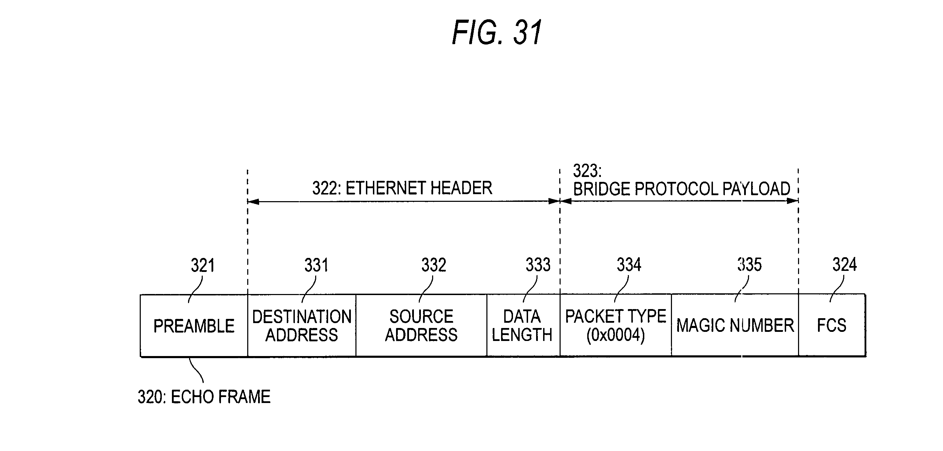

Fig. 31 is a schematic view showing the constitutional example of the echo frame. The echo frame 320 is the Ethernet frame similarly to the Ping frame 300 and it has the same structure as the Ping frame basically. Specifically, the echo frame 320 includes preamble 321, Ethernet header 322, bridge protocol payload 323, and FCS 324, and each of them is the same field as each of the preamble 301, the Ethernet header 302, the bridge protocol payload 303, and the FCS 304 of the Ping frame 300 of Fig. 29 and their description is omitted. Needless to say, the value of the data stored in these fields are different in the Ping frame and in the echo frame corresponding to the Ping frame.

The Ethernet header 322 of the echo frame 320 in Fig. 31 includes the fields of destination address 331, source address 332, and data length 333 and each of them is the same field as each of the destination address 311, the source address 312, and the data length 313 of the Ping frame 300 in Fig. 29. The destination address 331 of the echo frame 320 includes the address of the source bridge of the Ping frame 300 (that is, the value stored in the source address 312) and the source address 332 includes the address of the destination bridge of the Ping frame 300 (that is, the value stored in the destination address 311).

The bridge protocol payload 323 of the echo frame 320 in Fig. 31 includes packet type 334 and magic number 335, and each of them corresponds to each of the packet type 314 and the magic number 315 of the Ping frame 300 in Fig. 29. The packet type 334 of the echo frame 320, however, includes the value "0x0004" indicating that it is the echo frame and the magic number 335 includes the value (random number) stored in the magic number 315 of the Ping frame corresponding to the echo frame 320.

Returning to Fig. 30, when it transmits the echo frame in Step S332, the bridge controller 52 proceeds to the processing of Step S333. In Step S331, when it judges that the Ethernet interface 51 has not obtained the Ping frame 300, the bridge controller 52 omits the processing of Step S352 and proceeds to the processing of Step S353.

In Step S353, the bridge controller 52 judges whether the bridge confirmation processing is finished or not. When it judges that the bridge confirmation processing is not finished, the bridge controller 52 returns the processing to Step S351 and repeats the processing thereafter.

In Step S338, when it judges that the bridge confirmation processing is finished, the bridge controller 52 proceeds to the processing of Step S341 and after performing the predetermined finishing processing, it finishes the bridge confirmation processing.

The description is omitted here since it becomes overlap, but the bridge 12 and the bridge 13 perform the bridge confirmation response processing in the same way as the above-mentioned bridge 11.

Each of the bridges forming the IEEE 1394 virtual network regularly confirms the mutual presence while performing the above-mentioned bridge confirmation processing and bridge confirmation response processing, hence to grasp a change in the actual network structure corresponding to the IEEE 1394 virtual network easily and quickly, so that the structure of the IEEE 1394 virtual network can correspond to the structure of the actual network easily and correctly. Thus, it is possible to restrain the occurrence of disadvantages such as communication error on the IEEE 1394 virtual network.

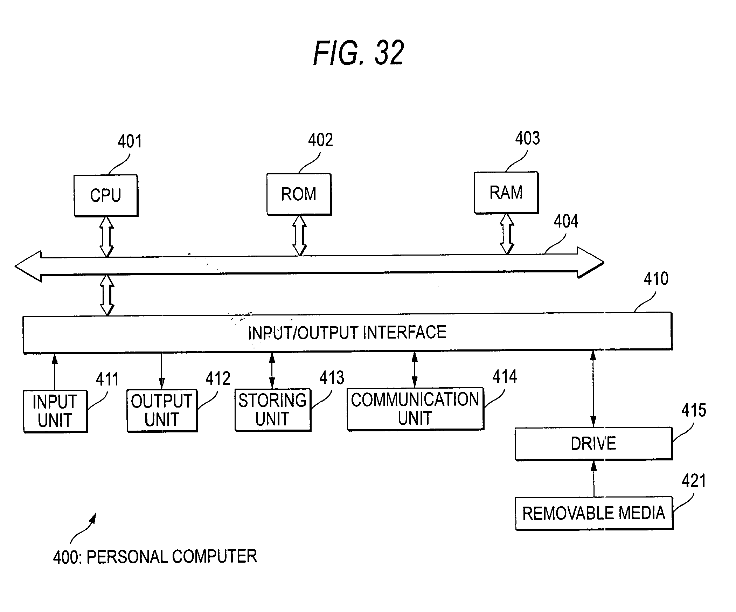

The above-mentioned series of processing can be performed by the hardware as well as by the software. In this case, for example, the bridge 11 to the bridge 13 may be formed as a personal computer as shown in Fig. 32.

In Fig. 32, the CPU (Central Processing Unit) 401 of the personal computer 400 performs various processing according to a program stored in the ROM (Read Only Memory) 402, or a program loaded from a storing unit 413 to the RAM (Random Access Memory) 403. The RAM 403 properly stores the data necessary for the CPU 401 to perform the various processing.

The CPU 401, the ROM 402, and the RAM 403 are mutually connected to each other through a bus 404. The bus 404 is also connected to an input/output interface 410.

The input/output interface 410 is connected to an input unit 411 including a keyboard and a mouse, a display including CRT and LCD, an output unit 412 including a speaker, a storing unit 413 formed by hard disk, and a communication unit 414 formed by a modem. The communication unit 414 performs the communication processing through a network including the Internet.

The input/output interface 410 is also connected to a drive 415 depending on necessity, where a removable media 421 including a magnetic disk, an optical disk, a magnetic optical disk, or a semiconductor memory is properly mounted, and a computer program read therefrom is installed into the storing unit 413 depending on necessity.

When the above-mentioned series of processing is performed by software, a program forming the software is installed from the network or the storing medium.

As illustrated in Fig. 32, this storing medium is formed not only by the removable media 421 including a magnetic disk (including a flexible disk), an optical disk (including CD-ROM (Compact Disk-Read Only Memory), DVD (Digital Versatile Disk)), a magnetic optical disk (including MD (Mini-Disk) (registered mark)), or a semiconductor memory with a program stored there, which is delivered in order to distribute the program to a user, separately from the main body, but also by the ROM 402 or the hard disk included in the storing unit 413 with a program recorded there, which is delivered to a user with the program built in the main body.

The steps for describing a program recorded in the storing medium include not only the processing performed in chronological order along the described order but also the processing performed in parallel or individually.

In this specification, the system means the whole system formed by a plurality of units.

Embodiments provide an information processing device, connected to a global network and a local network, for relaying information between the global network and the local network, includes: physical layer controlling means for controlling processing in a physical layer of the local network; network initialization means which controls said physical layer controlling means so as to initialize and reconfigure a topology of the local network; dummy node setting means which controls said physical layer controlling means so as to set a dummy node for configuring a virtual network that is a virtual one of the local network; and virtual network configuration controlling means which controls said dummy node setting means so as to set the dummy node, controls said network initialization means so as to initialize the topology of the local network, and reconfigures the topology by using the dummy node set by said dummy node setting means and the node of the local network, hence to configure the topology of the virtual network.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. An information processing device, connected to a global network and a local network, for relaying information between the global network and the local network, comprising:
physical layer controlling means for controlling processing in a physical layer of the local network;
network initialization means which controls said physical layer controlling means so as to initialize and reconfigure a topology of the local network;
dummy node setting means which controls said physical layer controlling means so as to set a dummy node for configuring a virtual network that is a virtual one of the local network; and
virtual network configuration controlling means which controls said dummy node setting means so as to set the dummy node, controls said network initialization means so as to initialize the topology of the local network, and reconfigures the topology by using the dummy node set by said dummy node setting means and the node of the local network, hence to configure the topology of the virtual network.

2. The information processing device according to Claim 1, wherein
said physical layer controlling means has a physical node of the local network, and
said dummy node setting means sets the physical node belonging to said physical layer controlling means as the dummy node.

3. The information processing device according to Claim 1, wherein
said physical layer controlling means virtually sets the node of the local network, and
said dummy node setting means sets the virtual node set by said physical layer controlling means, as the dummy node.

4. The information processing device according to Claim 1, further comprising
information obtaining means which obtains information about another information processing device, from the other information processing device connected to the global network and another local network, for relaying the information between the global network and the other local network, and
database holding means which configures and stores a database about the other information processing device, according to the information about other information processing device obtained by said information obtaining means, wherein
said dummy node setting means determines the number of the dummy nodes and sets the dummy nodes for that number, according to the information of the database stored by said database holding means.

5. The information processing device according to Claim 4, wherein
the information about the other information processing device includes information about address of the other information processing device and information about the number of nodes within the other local network corresponding to the other information processing device.

6. The information processing device according to Claim 5, wherein
said dummy node setting means sets the dummy nodes for the number of the nodes within the other local network, according to the information about the number of the nodes within the other local network obtained by said information obtaining means, and
said virtual network configuration controlling means controls said network initialization means so as to initialize the topology of the local network and configures the topology of the virtual network having the same number of the nodes as the total of the number of the nodes within the local network and the number of the nodes within the other local network.

7. The information processing device according to Claim 4, further comprising
confirmation means for confirming the presence of the other information processing device connected to the global network, wherein
when said confirmation means does not confirm the presence of the other information processing device, said virtual network configuration controlling means controls said information obtaining means so as to obtain the information about the other information processing device, controls said database holding means so as to configure and store the database about the other information processing device according to the information about the other information processing device obtained by said information obtaining means, controls said dummy node setting means so as to determine the number of the dummy nodes according to the information of the database stored by said database holding means and to set the dummy nodes for that number, and controls said network initialization means so as to reconfigure the topology of the virtual network.

8. The information processing device according to Claim 1, further comprising
relaying means which converts a flame of a packet and relays between the global network and the local network, and
transmission controlling means which controls said relaying means so as to convert the flame of a packet and to transmit the flame to the global network when the destination of the packet generated in the local area is the dummy node.

9. An information processing method of an information processing device, connected to a global network and a local network, for relaying information between the global network and the local network, comprising:
a physical layer controlling step of controlling processing in a physical layer of the local network;
a network initialization step of controlling the processing of said physical layer controlling step so as to initialize and reconfigure a topology of the local network;
a dummy node setting step of controlling the processing of said physical layer controlling step so as to set a dummy node for configuring a virtual network that is a virtual one of the local network; and
a virtual network configuration controlling step of controlling the processing of said dummy node setting step so as to set the dummy node, of controlling the processing of said network initialization step so as to initialize the topology of the local network, and of reconfiguring the topology by using the dummy node set through the processing of said dummy node setting step and the node of the local network, hence to configure the topology of the virtual network.

10. A program for making a computer, connected to a global network and a local network, to execute relay information between the global network and the local network, comprising:
a physical layer controlling step of controlling processing in a physical layer of the local network;
a network initialization step of controlling the processing of said physical layer controlling step so as to initialize and reconfigure a topology of the local network;
a dummy node setting step of controlling the processing of said physical layer controlling step so as to set a dummy node for configuring a virtual network that is a virtual one of the local network; and
a virtual network configuration controlling step of controlling the processing of said dummy node setting step so as to set the dummy node, of controlling the processing of said network initialization step so as to initialize the topology of the local network, and of reconfiguring the topology by using the dummy node set through the processing of said dummy node setting step and the node of the local network, hence to configure the topology of the virtual network.

11. An information processing device, connected to a global network and a local network, for relaying information between the global network and the local network, comprising:
a physical layer controlling unit for controlling processing in a physical layer of the local network;
a network initialization unit which controls said physical layer controlling unit so as to initialize and reconfigure a topology of the local network;
a dummy node setting unit which controls said physical layer controlling unit so as to set a dummy node for configuring a virtual network that is a virtual one of the local network; and
a virtual network configuration controlling unit which controls said dummy node setting unit so as to set the dummy node, controls said network initialization unit so as to initialize the topology of the local network, and reconfigures the topology by using the dummy node set by said dummy node setting unit and the node of the local network, hence to configure the topology of the virtual network.
